(19) Europäisches Patentamt
European Patent Office
Office européen des brevets

(11) **EP 4 679 912 A1**

(12) **EUROPEAN PATENT APPLICATION**
published in accordance with Art. 153(4) EPC

(43) Date of publication:
14.01.2026 Bulletin 2026/03

(21) Application number: 24766383.4

(22) Date of filing: 03.03.2024

(51) International Patent Classification (IPC):
*H04W 72/0446* (2023.01)

(52) Cooperative Patent Classification (CPC):
H04L 5/00; H04W 72/0446

(86) International application number:
PCT/CN2024/079772

(87) International publication number:
WO 2024/183668 (12.09.2024 Gazette 2024/37)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.03.2023 CN 202310203533

(71) Applicant: Apogee Networks, LLC
Dallas, TX 75201 (US)

(72) Inventors:
• WU, Lu
Shanghai 201206 (CN)
• ZHANG, Xiaobo
Shanghai 201206 (CN)

(74) Representative: Gunzelmann, Rainer
Wuesthoff & Wuesthoff
Patentanwälte und Rechtsanwalt PartG mbB
Schweigerstraße 2
81541 München (DE)

(54) **METHOD USED IN NODE FOR WIRELESS COMMUNICATION, AND APPARATUS**

(57) Disclosed in the present application are a method used in a node for wireless communication, and an apparatus. The method comprises: a first node receiving a plurality of SSB resource configurations, any SSB resource configuration amongst the plurality of SSB resource configurations being used for indicating at least one SSB resource, and the plurality of SSB resource configurations being all associated with a first cell; receiving a first information block, the first information block being used for determining a first SSB resource configuration; receiving a first signaling on the first cell, the first signaling being used for scheduling a first signal; and sending the first signal on the first cell, wherein a time domain resource occupied by the first signal depends on only the first SSB resource configuration amongst the plurality of SSB resource configurations, or the time domain resource occupied by the first signal depends on all SSB resources indicated by the plurality of SSB resource configurations. The present application can improve the network side energy efficiency and system flexibility.

FIG. 1

EP 4 679 912 A1

## Description

## Technical Field

The present application relates to a transmission method and apparatus in a wireless communication system, in particular to a transmission method and apparatus for wireless signals in a wireless communication system supporting a cellular network.

## Background Art

Network Energy Saving (NES) is of great significance for environmental sustainability, reducing an impact (greenhouse gas emissions) on environment, and saving operating costs. As 5G (the 5th Generation Partnership Project) becomes more prevalent in industries and geographic regions, very high data rates are required to handle more advanced services and applications (such as XR), resulting in increasingly dense networks, use of more antennas, greater bandwidths, and more frequency bands. In order to keep the impact of the 5G on the environment within a controllable range, new solutions need to be studied to improve network energy saving. Therefore, the 3GPP RAN #94 meeting passed a study item (SI) of the "Study on network energy savings".

Research work on network energy efficiency was started in NR R(Release)18, which comprises some key technologies. For example, by dynamically adjusting the transmission patterns of downlink common signals and broadcast signals, including but not limited to adjusting periods, time domain resource positions, etc. of signals/channels such as an SSB (SS/PBCH Block), SI (System Information), paging, and a cell common PDCCH (cell common Physical Downlink Control Channel), power consumption on a network side is saved.

## Summary of the Invention

The inventor has found through researches that how to enhance time domain resource assignment of the signals/channels is a key problem.

In view of the above problem, the present application discloses a solution. It should be noted that although the original intention of the present application is for a network energy-saving mode, the present application can also be applied to other scenarios, for example, a traditional non-energy-saving mode. Furthermore, using a unified design scheme for different scenarios (including but not limited to the network energy-saving mode and the traditional non-energy-saving mode) can also help to reduce hardware complexity and costs. In case of no conflict, embodiments and features in the embodiments in any node of the present application can be applied to any other node. In case of no conflict, the embodiments and features in the embodiments of the present application may be arbitrarily combined with each other.

As one embodiment, the interpretation of the terminologies in the present application is made with reference to the definitions of TS36 series of a specification protocol of 3GPP.

As one embodiment, the interpretation of the terminologies in the present application is made with reference to the definitions of TS38 series of a specification protocol of 3GPP.

As one embodiment, the interpretation of the terminologies in the present application is made with reference to the definitions of TS37 series of a specification protocol of 3GPP.

As one embodiment, the interpretation of the terminologies in the present application is made with reference to the definitions of a specification protocol of the IEEE (Institute of Electrical and Electronics Engineers).

The present application discloses a method used in a first node for wireless communication, characterized by comprising:

receiving a plurality of SSB resource configurations, any SSB resource configuration amongst the plurality of SSB resource configurations being used for indicating at least one SSB resource, and the plurality of SSB resource configurations being all associated with a first cell;

receiving a first information block, the first information block being used for determining a first SSB resource configuration, and the first SSB resource configuration being one of the plurality of SSB resource configurations;

in response to receiving the first information block, determining an SSB transmission according to only the first SSB resource configuration amongst the plurality of SSB resource configurations;

receiving a first signaling on the first cell, the first signaling being used for scheduling a first signal; and

sending the first signal on the first cell,

wherein a time domain resource occupied by the first signal depends on only the first SSB resource configuration amongst the plurality of SSB resource configurations.

According to one aspect of the present application, it is characterized by comprising:

receiving a plurality of SSB resource configurations, any SSB resource configuration amongst the plurality of SSB resource configurations being used for indicating at least one SSB resource, and the plurality of SSB resource configurations being all associated with a first cell;

receiving a first information block, the first information block being used for determining a first SSB resource configuration, and the first SSB resource configuration being one of the plurality of SSB resource configurations;

in response to receiving the first information block, determining an SSB transmission according to only the first SSB resource configuration amongst the plurality of SSB resource configurations;

receiving a first signaling on the first cell, the first signaling being used for scheduling a first signal; and

sending the first signal on the first cell,

wherein a time domain resource occupied by the first signal depends on all SSB resources indicated by the plurality of SSB resource configurations.

As one embodiment, the problem to be solved in the present application comprises: how to determine the time domain resource occupied by the first signal in the case that the first information block is used for determining the first SSB resource configuration.

As one embodiment, the benefits of the present application comprise: improving the energy efficiency on a network side.

As one embodiment, the benefits of the present application comprise: increasing the system flexibility and reducing the signaling overhead.

As one embodiment, the benefits of the present application comprise: improving the resource utilization rate and reducing the latency.

As one embodiment, the benefits of the present application comprise: having the good backward compatibility and simplifying the system design.

According to one aspect of the present application, it is characterized by comprising:

receiving a second signaling, the second signaling being used for scheduling a second signal;

abandoning sending the second signal on a target time domain resource when a first condition is met; and sending the second signal on the target time domain resource when the first condition is not met, wherein the time domain resource occupied by the first signal depends on only the first SSB resource configuration amongst the plurality of SSB resource configurations; the target time domain resource depends on one SSB resource configuration other than the first SSB resource configuration amongst the plurality of SSB resource configurations; and the first condition comprises: the target time domain resource overlaps with an SSB resource determined by the first SSB resource configuration in a time domain.

As one embodiment, the above method determines whether to send the second signal on the target time domain resource according to the first condition, avoiding conflicts in the time domain and ensuring transmission reliability.

According to one aspect of the present application, it is characterized in that the first condition further comprises that the second signaling is received no later than a first symbol; and the first symbol depends on a symbol occupied by the first information block.

According to one aspect of the present application, it is characterized in that the first condition further comprises that the target time domain resource is not earlier than a first symbol; and the first symbol depends on a symbol occupied by the first information block.

As one embodiment, the above method increases the system flexibility and avoids waste of the signaling overhead.

According to one aspect of the present application, it is characterized in that the meaning of the sentence "the plurality of SSB resource configurations being all associated with a first cell" comprises: all SSB resources respectively indicated by the plurality of SSB resource configurations are all on the first cell.

According to one aspect of the present application, the first cell is an SCell, and an SSB resource indicated by at least one SSB resource configuration amongst the plurality of SSB resource configurations is on a second cell; and the second cell is a PCell, or the second cell is one SCell other than the first cell.

According to one aspect of the present application, it is characterized in that the first cell is an SCell, an SSB resource indicated by the first SSB resource configuration is on the first cell, and an SSB resource indicated by at least one SSB resource configuration amongst the plurality of SSB resource configurations is on a second cell; and the second cell is a PCell, or the second cell is one SCell other than the first cell.

As one embodiment, the above method simplifies the system design and has the good backward compatibility.

According to one aspect of the present application, it is characterized in that the first signal is transmitted in a first available slot group, and the first available slot group comprises at least one available slot; the meaning of "a time domain resource occupied by the first signal depends on only the first SSB resource configuration amongst the plurality of SSB resource configurations" comprises: the first available slot group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first available slot group depends on all SSB resources indicated by the plurality of SSB resource configurations.

As one embodiment, the above method establishes a plurality of dependency relationships between the first available slot group and the plurality of SSB resource configurations, improving the system flexibility and enhancing the transmission robustness.

According to one aspect of the present application, it is characterized in that the first signaling is used for indicating a first symbol set, symbols occupied by the first signal comprise at least one symbol in the first symbol set that does not belong to a first invalid symbol group, and the first invalid symbol group comprises at least one invalid symbol; the meaning of "a time domain resource occupied by the first signal depends on only the first SSB resource configuration amongst the plurality of SSB resource configurations" comprises: the first invalid symbol group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first invalid symbol group depends on all SSB resources indicated by the plurality of SSB resource configurations.

As one embodiment, the above method improves the system flexibility and the transmission robustness.

The present application discloses a method used in a second node for wireless communication, characterized by comprising:

sending a plurality of SSB resource configurations, any SSB resource configuration amongst the plurality of SSB resource configurations being used for indicating at least one SSB resource, and the plurality of SSB resource configurations being all associated with a first cell;
sending a first information block, the first information block being used for determining a first SSB resource configuration, and the first SSB resource configuration being one of the plurality of SSB resource configurations;
sending a first signaling on the first cell, the first signaling being used for scheduling a first signal; and receiving the first signal on the first cell,
wherein in response to receiving the first information block, a recipient of the first information block determines an SSB transmission according to only the first SSB resource configuration amongst the plurality of SSB resource configurations; and a time domain resource occupied by the first signal depends on only the first SSB resource configuration amongst the plurality of SSB resource configurations.

According to one aspect of the present application, it is characterized by comprising:

sending a plurality of SSB resource configurations, any SSB resource configuration amongst the plurality of SSB resource configurations being used for indicating at least one SSB resource, and the plurality of SSB resource configurations being all associated with a first cell;
sending a first information block, the first information block being used for determining a first SSB resource configuration, and the first SSB resource configuration being one of the plurality of SSB resource configurations;
sending a first signaling on the first cell, the first signaling being used for scheduling a first signal; and receiving the first signal on the first cell,
wherein in response to receiving the first information block, a recipient of the first information block determines an SSB transmission according to only the first SSB resource configuration amongst the plurality of SSB resource configurations; and a time domain resource occupied by the first signal depends on all SSB resources indicated by the plurality of SSB resource configurations.

According to one aspect of the present application, it is characterized by comprising:

sending a second signaling, the second signaling being used for scheduling a second signal;
abandoning receiving the second signal on a target time domain resource when a first condition is met; and receiving the second signal on the target time domain resource when the first condition is not met,
wherein the time domain resource occupied by the first signal depends on only the first SSB resource configuration amongst the plurality of SSB resource configurations; the target time domain resource depends on one SSB resource configuration other than the first SSB resource configuration amongst the plurality of SSB resource configurations; and the first condition comprises: the target time domain resource overlaps with an SSB resource determined by the first SSB resource configuration in a time domain.

According to one aspect of the present application, it is characterized in that the first condition further comprises that the second signaling is received no later than a first symbol; and the first symbol depends on a symbol occupied by the first information block.

According to one aspect of the present application, it is characterized in that the first condition further comprises that the target time domain resource is not earlier than a first symbol; and the first symbol depends on a symbol occupied by the first information block.

According to one aspect of the present application, it is characterized in that the meaning of the sentence "the plurality of SSB resource configurations being all associated with a first cell" comprises: all SSB resources respectively indicated by the plurality of SSB resource configurations are all on the first cell.

According to one aspect of the present application, the first cell is an SCell, and an SSB resource indicated by at least one SSB resource configuration amongst the plurality of SSB resource configurations is on a second cell; and the second cell is a PCell, or the second cell is one SCell other than the first cell.

According to one aspect of the present application, it is characterized in that the first cell is an SCell, an SSB resource indicated by the first SSB resource configuration is on the first cell, and an SSB resource indicated by at least one SSB resource configuration amongst the plurality of SSB resource configurations is on a second cell; and the second cell is a PCell, or the second cell is one SCell other than the first cell.

According to one aspect of the present application, it is characterized in that the first signal is transmitted in a first available slot group, and the first available slot group comprises at least one available slot; the meaning of "a time domain resource occupied by the first signal depends on only the first SSB resource configuration amongst the plurality of SSB resource configurations" comprises: the first available slot group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first available slot group depends on all SSB resources indicated by the plurality of SSB resource configurations.

According to one aspect of the present application, it is characterized in that the first signaling is used for indicating a first symbol set, symbols occupied by the first signal comprise at least one symbol in the first symbol set that does not belong to a first invalid symbol group, and the first invalid symbol group comprises at least one invalid symbol; the meaning of "a time domain resource occupied by the first signal depends on only the first SSB resource configuration amongst the plurality of SSB resource configurations" comprises: the first invalid symbol group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first invalid symbol group depends on all SSB resources indicated by the plurality of SSB resource configurations.

The present application discloses a first node device for wireless communication, characterized by comprising:

a first receiver receiving a plurality of SSB resource configurations, any SSB resource configuration amongst the plurality of SSB resource configurations being used for indicating at least one SSB resource, and the plurality of SSB resource configurations being all associated with a first cell; receiving a first information block, the first information block being used for determining a first SSB resource configuration, and the first SSB resource configuration being one of the plurality of SSB resource configurations; in response to receiving the first information block, determining an SSB transmission according to only the first SSB resource configuration amongst the plurality of SSB resource configurations; and receiving a first signaling on the first cell, the first signaling being used for scheduling a first signal; and a first transmitter sending the first signal on the first cell, wherein a time domain resource occupied by the first signal depends on only the first SSB resource configuration amongst the plurality of SSB resource configurations, or the time domain resource occupied by the first signal depends on all SSB resources indicated by the plurality of SSB resource configurations.

The present application discloses a second node device for wireless communication, characterized by comprising:

a second transmitter sending a plurality of SSB resource configurations, any SSB resource configuration amongst the plurality of SSB resource configurations being used for indicating at least one SSB resource, and the plurality of SSB resource configurations being all associated with a first cell; sending a first information block, the first information block being used for determining a first SSB resource configuration, and the first SSB resource configuration being one of the plurality of SSB resource configurations; and sending a first signaling on the first cell, the first signaling being used for scheduling a first signal; and a second receiver receiving the first signal on the first cell, wherein in response to receiving the first information block, a recipient of the first information block determines an SSB transmission according to only the first SSB resource configuration amongst the plurality of SSB resource configurations; and a time domain resource occupied by the first signal depends on only the first SSB resource configuration amongst the plurality of SSB resource configurations, or the time domain resource occupied by the first signal depends on all SSB resources indicated by the plurality of SSB resource configurations.

As one embodiment, compared with the traditional solution, the present application has the following advantages:

- improving the energy efficiency on the network side;
- improving the transmission reliability and the resource utilization rate, and increasing the system flexibility;
- reducing the signaling overhead; and
- having the good backward compatibility, and simplifying the signaling design.

**Brief Description of the Drawings**

Other features, purposes and advantages of the present application will become more apparent from reading the detailed description of the non-limiting embodiments made with reference to the following drawings:

FIG. 1 shows a flowchart of processing of a first node according to one embodiment of the present application;

FIG. 2 shows a schematic diagram of a network architecture according to one embodiment of the present application;

FIG. 3 shows a schematic diagram of an embodiment of a radio protocol architecture for a user plane and a control plane according to one embodiment of the present application;

FIG. 4 shows a schematic diagram of a first communication device and a second communication device according to one embodiment of the present application;

FIG. 5 shows a flowchart of a wireless transmission according to one embodiment of the present application;

FIG. 6 shows a schematic diagram of a first condition according to one embodiment of the present application;

FIGs. 7A-7B respectively show schematic diagrams of a first condition according to still another embodiment of the present application;

FIG. 8 shows a schematic diagram of a plurality of SSB resource configurations according to one embodiment of the present application;

FIG. 9 shows a schematic diagram of a plurality of SSB resource configurations and a second cell according to one embodiment of the present application;

FIG. 10 shows a schematic diagram of a plurality of SSB resource configurations and a second cell according to another embodiment of the present application;

FIG. 11 shows a schematic diagram of a first available slot group according to one embodiment of the present application;

FIG. 12 shows a schematic diagram of a first invalid symbol group according to one embodiment of the present application;

FIG. 13 shows a structural block diagram of a processing device used in a first node device according to one embodiment of the present application; and

FIG. 14 shows a structural block diagram of a processing device used in a second node device according to one embodiment of the present application.

## Detailed Description of Embodiments

The technical solutions of the present application will be further described in detail below in conjunction with the drawings. It should be noted that, in case of no conflict, embodiments and features in the embodiments in the present application may be arbitrarily combined with each other.

## Embodiment 1

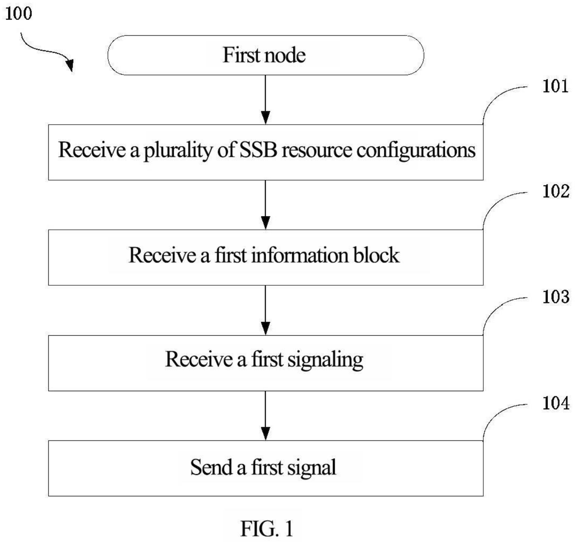

Embodiment 1 illustrates a flowchart of processing of a first node according to one embodiment of the present application, as shown in FIG. 1. In 100 as shown in FIG. 1, each block represents one step. In particular, the order of steps in the blocks does not represent a specific time sequence relation among the steps.

In Embodiment 1, the first node in the present application receives a plurality of SSB resource configurations in step 101, any SSB resource configuration amongst the plurality of SSB resource configurations being used for indicating at least one SSB resource, and the plurality of SSB resource configurations being all associated with a first cell; receives a first information block in step 102, the first information block being used for determining a first SSB resource configuration, and the first SSB resource configuration being one of the plurality of SSB resource configurations; in response to receiving the first information block, determines an SSB transmission according to only the first SSB resource configuration amongst the plurality of SSB resource configurations; receives a first signaling on the first cell in step 103, the first signaling being used for scheduling a first signal; and sends the first signal on the first cell in step 104, wherein a time domain resource occupied by the first signal depends on only the first SSB resource configuration amongst the plurality of SSB resource configurations, or the time domain resource occupied by the first signal depends on all SSB resources indicated by the plurality of SSB resource configurations.

As one embodiment, the time domain resource occupied by the first signal depends on only the first SSB resource configuration amongst the plurality of SSB resource configurations.

As one embodiment, the time domain resource occupied by the first signal depends on all SSB resources indicated by the plurality of SSB resource configurations.

As one embodiment, the plurality of SSB resource configurations comprise an RRC (Radio Resource Control) signaling.

As one embodiment, the plurality of SSB resource configurations comprise one RRC IE (Information Element).

As one embodiment, the plurality of SSB resource configurations comprise information in at least one field in one RRC IE.

As one embodiment, the plurality of SSB resource configurations comprise one field in one RRC IE.

As one embodiment, the plurality of SSB resource configurations belong to IE ServingCellConfigCommon.

As one embodiment, the plurality of SSB resource configurations belong to SIB1.

As one embodiment, the plurality of SSB resource configurations belong to IE ServingCellConfigCommonSIB.

As one embodiment, the names of the plurality of SSB resource configurations comprise ssb-PositionsInBurst.

As one embodiment, at least one SSB resource configuration amongst the plurality of SSB resource configurations belongs to IE ServingCellConfigCommon.

As one embodiment, each SSB resource configuration amongst the plurality of SSB resource configurations belongs to IE ServingCellConfigCommon.

As one embodiment, at least one SSB resource configuration amongst the plurality of SSB resource configurations belongs to SIB1.

As one embodiment, each SSB resource configuration amongst the plurality of SSB resource configurations belongs to SIB1.

As one embodiment, at least one SSB resource configuration amongst the plurality of SSB resource configurations belongs to IE ServingCellConfigCommonSIB.

As one embodiment, each SSB resource configuration amongst the plurality of SSB resource configurations belongs to IE ServingCellConfigCommonSIB.

As one embodiment, the name of at least one SSB resource configuration amongst the plurality of SSB resource configurations comprises ssb-PositionsInBurst.

As one embodiment, the name of each SSB resource configuration amongst the plurality of SSB resource configurations comprises ssb-PositionsInBurst.

As one embodiment, at least one SSB resource configuration amongst the plurality of SSB resource configurations belongs to an RRC IE.

As one embodiment, the plurality of SSB resource configurations belong to the same RRC IE.

As one embodiment, any SSB resource configuration amongst the plurality of SSB resource configurations is used for indicating an SSB resource.

As one embodiment, any SSB resource configuration amongst the plurality of SSB resource configurations is used for indicating that an SSB resource is transmitted.

As one embodiment, any SSB resource configuration amongst the plurality of SSB resource configurations is used for indicating that at least one SSB resource is transmitted.

As one embodiment, the number of SSB resources indicated by any SSB resource configuration amongst the plurality of SSB resource configurations does not exceed 64.

As one embodiment, the number of SSB resources indicated by any SSB resource configuration amongst the plurality of SSB resource configurations does not exceed 8.

As one embodiment, the number of SSB resources indicated by any SSB resource configuration amongst the plurality of SSB resource configurations does not exceed 4.

As one embodiment, any SSB resource configuration amongst the plurality of SSB resource configurations indicates the time-domain position of an SSB resource.

As one embodiment, any SSB resource configuration amongst the plurality of SSB resource configurations indicates the time-domain position of the transmitted SSB resource.

As one embodiment, any SSB resource configuration amongst the plurality of SSB resource configurations indicates the time-domain position of the transmitted SSB resource within half a radio frame.

As one embodiment, within half a radio frame, the time-domain position of the SSB resource is predefined.

As one embodiment, within half a radio frame, the time-domain position of the SSB resource is fixed.

As one embodiment, any SSB resource configuration amongst the plurality of SSB resource configurations indicates an SSB resource through a bitmap.

As one embodiment, the bitmap comprises at least one bit.

As one embodiment, the number of bits comprised in the bitmap is one of 4, 8, and 64.

As one embodiment, the number of bits comprised in the bitmap is 4.

As one embodiment, the number of bits comprised in the bitmap is 8.

As one embodiment, the number of bits comprised in the bitmap is 64.

As one embodiment, a bit in the bitmap being 1 indicates that an SSB resource is transmitted.

As one embodiment, a bit in the bitmap being 0 indicates that an SSB resource is not transmitted.

As one embodiment, the SSB resource is an SS/PBCH (Synchronization Signal/Physical Broadcast Channel) block resource.

As one embodiment, the SS/PBCH block comprises at least one of a PSS (Primary Synchronization Signal), an SSS (Secondary Synchronization Signal), and a PBCH (Physical Broadcast Channel).

As one embodiment, the SS/PBCH block comprises at least a PSS amongst the PSS, an SSS, and a PBCH.

As one embodiment, the SS/PBCH block comprises at least a PSS and an SSS amongst the PSS, the SSS, and a PBCH.

As one embodiment, the SS/PBCH block comprises a PSS, an SSS, and a PBCH.

As one embodiment, the SS/PBCH block occupies at least one symbol in the time domain.

As one embodiment, the SS/PBCH block occupies 4 symbols in the time domain.

As one embodiment, the symbol is a single-carrier symbol.

As one embodiment, the symbol is a multi-carrier symbol.

As one embodiment, the multi-carrier symbol is an OFDM (Orthogonal Frequency Division Multiplexing) symbol.

As one embodiment, the symbol is obtained by an output of transform precoding undergoing the generation of an OFDM symbol.

As one embodiment, the multi-carrier symbol is an SC-FDMA (Single Carrier-Frequency Division Multiple Access) symbol.

As one embodiment, the multi-carrier symbol is a DFT-S-OFDM (Discrete Fourier Transform Spread OFDM) symbol.

As one embodiment, the multi-carrier symbol is an FBMC (Filter Bank Multi Carrier) symbol.

As one embodiment, the multi-carrier symbol comprises a CP (Cyclic Prefix).

As one embodiment, the plurality of SSB resource configurations are used for indicating SSB resources of the same serving cell.

As one embodiment, the plurality of SSB resource configurations are respectively used for indicating SSB resources of different service cells.

As one embodiment, at least two SSB resource configurations amongst the plurality of SSB resource configurations are respectively used for indicating SSB resources of different serving cells.

As one embodiment, any two SSB resource configurations amongst the plurality of SSB resource configurations are respectively used for indicating SSB resources of different serving cells.

As one embodiment, the serving cell belongs to a PCG (Primary Cell Group).

As one embodiment, the serving cell belongs to an SCG (Secondary Cell Group).

As one embodiment, the serving cell is a PCell (Primary Cell) belonging to a PCG.

As one embodiment, the serving cell is an SCell (Secondary Cell) belonging to a PCG.

As one embodiment, the serving cell is a PSCell (Primary SCG Cell) belonging to an SCG.

As one embodiment, the serving cell is an SCell belonging to an SCG.

As one embodiment, the first cell is one serving cell of the first node.

As one embodiment, the first cell belongs to a PCG.

As one embodiment, the first cell belongs to an SCG.

As one embodiment, the first cell is a SpCell (Special Cell).

As one embodiment, the first cell is a PCell.

As one embodiment, the first cell is a PSCell.

As one embodiment, the first cell is an SCell.

As one embodiment, the first cell is an SSB-less SCell.

As one embodiment, a PCI (Physical Cell Identity) of the first cell is used for generating a PSS and an SSS of each SSB resource indicated by the plurality of SSB resource configurations.

As one embodiment, a PCI of the first cell is used for generating a PSS and an SSS of each SSB resource indicated by each SSB resource configuration amongst the plurality of SSB resource configurations.

As one embodiment, a PCI of the first cell is used for generating a PSS and an SSS of partial SSB resources indicated by the plurality of SSB resource configurations.

As one embodiment, a PCI of the first cell is used for generating a PSS and an SSS of each SSB resource indicated by partial SSB resource configurations amongst the plurality of SSB resource configurations.

As one embodiment, a PCI of the first cell is used for generating a PSS and an SSS of each SSB resource indicated by one SSB resource configuration amongst the plurality of SSB resource configurations.

As one embodiment, a PCI of the first cell is used for generating a PSS and an SSS of each SSB resource indicated by the first SSB resource configuration.

As one embodiment, the PCI comprises a first identity and a second identity.

As one embodiment, at least the second identity in the first identity and the second identity is used for generating a PSS.

As one embodiment, the second identity is used for generating a PSS.

As one embodiment, both the first identity and the second identity are used for generating an SSS.

As one embodiment, the first identity is $N_{ID}^{(1)}$, and the second identity is $N_{ID}^{(2)}$.

As one embodiment, the $N_{ID}^{(1)}$ is one non-negative integer.

As one embodiment, the $N_{ID}^{(1)}$ is one non-negative integer not greater than 335.

As one embodiment, the $N_{ID}^{(1)}$ is one non-negative integer ranging from 0 to 335.

As one embodiment, the $N_{ID}^{(2)}$ is one non-negative integer.

As one embodiment, the $N_{ID}^{(2)}$ is a non-negative integer not greater than 2.

As one embodiment, a value of the $N_{ID}^{(2)}$ is one of 0, 1, and 2.

As one embodiment, the PCI is equal to $3N_{ID}^{(1)} + N_{ID}^{(2)}$.

As one embodiment, the process that the PCI is used for generating a PSS and an SSS specifically refers to Chapter 7 of 3GPP TS38.211.

As one embodiment, all SSB resource configurations amongst the plurality of SSB resource configurations are configured to the first cell.

As one embodiment, at least one SSB resource configuration amongst the plurality of SSB resource configurations is configured to one cell other than the first cell.

As one embodiment, partial SSB resource configurations amongst the plurality of SSB resource configurations are configured to one cell other than the first cell.

As one embodiment, all SSB resources indicated by the plurality of SSB resource configurations are on the first cell.

As one embodiment, at least one SSB resource amongst all SSB resources indicated by the plurality of SSB resource configurations is on one cell other than the first cell.

As one embodiment, partial SSB resources amongst all SSB resources indicated by the plurality of SSB resource configurations are on one cell other than the first cell.

As one embodiment, SSB resources indicated by partial SSB resource configurations amongst the plurality of SSB resource configurations are on one cell other than the first cell.

As one embodiment, all SSB resources indicated by partial SSB resource configurations amongst the plurality of SSB resource configurations are on one cell other than the first cell.

As one embodiment, the first cell and one cell other than the first cell belong to the same cell group.

As one embodiment, the first cell and one cell other than the first cell belong to the same PCG.

As one embodiment, the first cell and one cell other than the first cell belong to the same SCG.

As one embodiment, the first cell and one cell other than the first cell do not belong to the same cell group.

As one embodiment, the first cell belongs to a PCG, and one cell other than the first cell belongs to an SCG.

As one embodiment, the first cell belongs to an SCG, and one cell other than the first cell belongs to a PCG.

As one embodiment, the meaning of "the plurality of SSB resource configurations being all associated with a first cell" comprises: the plurality of SSB resource configurations are all configured to the first cell.

As one embodiment, the meaning of "the plurality of SSB resource configurations being all associated with a first cell" comprises: only partial SSB resource configurations amongst the plurality of SSB resource configurations are configured to the first cell.

As one embodiment, the meaning of "the plurality of SSB resource configurations being all associated with a first cell" comprises: at least one SSB resource configuration amongst the plurality of SSB resource configurations is configured to the first cell.

As one embodiment, the meaning of "the plurality of SSB resource configurations being all associated with a first cell" comprises: all SSB resources indicated by the plurality of SSB resource configurations are all on the first cell.

As one embodiment, the meaning of "the plurality of SSB resource configurations being all associated with a first cell" comprises: partial SSB resources amongst all SSB resources indicated by the plurality of SSB resource configurations are on the first cell.

As one embodiment, the meaning of "the plurality of SSB resource configurations being all associated with a first cell" comprises: at least one SSB resource amongst all SSB resources indicated by the plurality of SSB resource configurations is on the first cell.

As one embodiment, the meaning of "the plurality of SSB resource configurations being all associated with a first cell" comprises: the plurality of SSB resource configurations are all configured to the first cell, and all SSB resources indicated by the plurality of SSB resource configurations are on the first cell.

As one embodiment, the meaning of "the plurality of SSB resource configurations being all associated with a first cell" comprises: the plurality of SSB resource configurations are all configured to the first cell, and only partial SSB resources amongst all SSB resources indicated by the plurality of SSB resource configurations are on the first cell.

As one embodiment, the meaning of "the plurality of SSB resource configurations being all associated with a first cell" comprises: the plurality of SSB resource configurations are all configured to the first cell, and at least one SSB resource amongst all SSB resources indicated by the plurality of SSB resource configurations is on the first cell.

As one embodiment, the meaning of "the plurality of SSB resource configurations being all associated with a first cell" comprises: SSB resources indicated by partial SSB resource configurations amongst the plurality of SSB resource configurations are on the first cell.

As one embodiment, the meaning of "the plurality of SSB resource configurations being all associated with a first cell" comprises: only partial SSB resource configurations amongst the plurality of SSB resource configurations are configured to the first cell, and all SSB resources indicated by only partial SSB resource configurations amongst the plurality of SSB resource configurations are on the first cell.

As one embodiment, the meaning of "the plurality of SSB resource configurations being all associated with a first cell" comprises: only partial SSB resource configurations amongst the plurality of SSB resource configurations are configured to the first cell, and partial SSB resources amongst all SSB resources indicated by only partial SSB resource configurations amongst the plurality of SSB resource configurations are on the first cell.

As one embodiment, the meaning of "the plurality of SSB resource configurations being all associated with a first cell" comprises: only partial SSB resource configurations amongst the plurality of SSB resource configurations are configured to the first cell, and at least one SSB resource amongst all SSB resources indicated by only partial SSB resource configurations amongst the plurality of SSB resource configurations is on the first cell.

As one embodiment, the meaning of "the plurality of SSB resource configurations being all associated with a first cell" comprises: SSB resources indicated by the plurality of SSB resource configurations are indicated to the synchronization of the first cell.

As one embodiment, the meaning of "the plurality of SSB resource configurations being all associated with a first cell" comprises: SSB resources indicated by the plurality of SSB resource configurations are indicated to the synchronization of the first cell, and only partial SSB resources amongst all SSB resources indicated by the plurality of SSB resource configurations are on the first cell.

As one embodiment, the meaning of "the plurality of SSB resource configurations being all associated with a first cell" comprises: SSB resources indicated by the plurality of SSB resource configurations are indicated to the synchronization of the first cell, and at least one SSB resource amongst all SSB resources indicated by the plurality of SSB resource configurations is on the first cell.

As one embodiment, the meaning of "the plurality of SSB resource configurations being all associated with a first cell" comprises: SSB resources indicated by the plurality of SSB resource configurations are indicated to the synchronization of the first cell, and all SSB resources indicated by the plurality of SSB resource configurations are on the first cell.

As one embodiment, the meaning of "the plurality of SSB resource configurations being all associated with a first cell" comprises: a PCI of the first cell is used for generating a PSS and an SSS of only partial SSB resources amongst all SSB resources indicated by the plurality of SSB resource configurations, and the plurality of SSB resource configurations are indicated to the synchronization of the first cell.

As one embodiment, the meaning of "the plurality of SSB resource configurations being all associated with a first cell" comprises: a PCI of the first cell is used for generating a PSS and an SSS of at least one SSB resource amongst all SSB resources indicated by the plurality of SSB resource configurations, and the plurality of SSB resource configurations are indicated to the synchronization of the first cell.

As one embodiment, the meaning of "the plurality of SSB resource configurations being all associated with a first cell" comprises: a PCI of the first cell is used for generating a PSS and an SSS of all SSB resources indicated by the plurality of SSB resource configurations, and the plurality of SSB resource configurations are indicated to the synchronization of the first cell.

As one embodiment, the meaning of "the plurality of SSB resource configurations being all associated with a first cell" comprises: a PCI of the first cell is used for generating a PSS and an SSS of only partial SSB resources amongst all SSB resources indicated by the plurality of SSB resource configurations, and the plurality of SSB resource configurations are configured to the synchronization of the first cell.

As one embodiment, the meaning of "the plurality of SSB resource configurations being all associated with a first cell" comprises: a PCI of the first cell is used for generating a PSS and an SSS of at least one SSB resource amongst all SSB resources indicated by the plurality of SSB resource configurations, and the plurality of SSB resource configurations are configured to the synchronization of the first cell.

As one embodiment, the meaning of "the plurality of SSB resource configurations being all associated with a first cell" comprises: a PCI of the first cell is used for generating a PSS and an SSS of all SSB resources indicated by the plurality of SSB resource configurations, and the plurality of SSB resource configurations are configured to the synchronization of the first cell.

As one embodiment, the synchronization of the first cell comprises a time synchronization of the first cell.

As one embodiment, a time synchronization of the first cell comprises a frame synchronization.

As one embodiment, a time synchronization of the first cell comprises a frame synchronization and a slot synchronization.

As one embodiment, a time synchronization of the first cell comprises a frame synchronization, a slot synchronization, and a symbol synchronization.

As one embodiment, the synchronization of the first cell comprises a frequency synchronization of the first cell.

As one embodiment, the synchronization of the first cell comprises a time synchronization and a frequency synchronization of the first cell.

As one embodiment, the first information block is carried by an RRC signaling.

As one embodiment, the first information block is borne by an MAC CE (Medium Access Control layer Control Element).

As one embodiment, the first information block is borne by a physical layer signaling.

As one embodiment, the first information block is jointly borne by a higher layer signaling and a physical layer signaling.

As one embodiment, the first information block is borne by at least a physical layer signaling in an MAC CE or the physical layer signaling.

As one embodiment, the first information block is borne by at least a physical layer signaling in an RRC signaling or the physical layer signaling.

As one embodiment, the first information block is borne by DCI (Downlink Control Information).

As one embodiment, the first information block is borne by at least a DCI signaling in an MAC CE or the DCI signaling.

As one embodiment, the first information block is borne by at least a DCI signaling in an RRC signaling or the DCI signaling.

As one embodiment, the first information block is borne by an MIB.

As one embodiment, the first information block is borne by an SIB.

As one embodiment, the first information block is borne by a cell-specific signaling.

As one embodiment, the first information block is borne by a cell-specific higher layer signaling.

As one embodiment, the first information block is borne by cell-specific DCI.

As one embodiment, the first information block is cell-specific.

As one embodiment, the first information block is borne by a UE-group common signaling.

As one embodiment, the first information block is borne by a UE-group common higher layer signaling.

As one embodiment, the first information block is borne by UE-group common DCI.

As one embodiment, the first information block is UE-group common.

As one embodiment, the first information block is borne by a UE-specific signaling.

As one embodiment, the first information block is borne by a UE-specific higher layer signaling.

As one embodiment, the first information block is borne by UE-specific DCI.

As one embodiment, the first information block is UE-specific.

As one embodiment, the meaning of the UE-specific comprises: UE-dedicated.

As one embodiment, the first information block is used for activating the first SSB resource configuration from the plurality of SSB resource configurations.

As one embodiment, the first information block is used for indicating the first SSB resource configuration from the plurality of SSB resource configurations.

As one embodiment, the first information block is used for indicating the first SSB resource configuration.

As one embodiment, the first information block explicitly indicates the first SSB resource configuration.

As one embodiment, the first information block implicitly indicates the first SSB resource configuration.

As one embodiment, the first information block directly indicates the first SSB resource configuration.

As one embodiment, the first information block indirectly indicates the first SSB resource configuration.

As one embodiment, the first information block is used for indicating an index of the first SSB resource configuration.

As one embodiment, the first information block is used for indicating an identity of the first SSB resource configuration.

As one embodiment, the first information block is used for indicating a serial number of the first SSB resource configuration.

As one embodiment, the first information block is used for indicating a position of the first SSB resource configuration in the plurality of SSB resource configurations.

As one embodiment, the first information block is used for indicating a serial number of the first SSB resource configuration in the plurality of SSB resource configurations.

As one embodiment, the first information block is used for indicating an index of the first SSB resource configuration in the plurality of SSB resource configurations.

As one embodiment, the first information block indicates the first cell.

As one embodiment, the first information block indicates an SSB resource on the first cell.

As one embodiment, the first information block indicates that an SSB resource on the first cell is activated.

As one embodiment, the first information block indicates that an SSB resource on the first cell is transmitted.

As one embodiment, the first information block indicates a handover or change of an SSB resource configuration.

As one embodiment, the first information block indicates a change of a transmitted SSB resource.

As one embodiment, the first information block indicates a change of the number of transmitted SSB resources.

As one embodiment, the first information block indicates that the number of transmitted SSB resources is reduced.

As one embodiment, the first information block indicates that the number of transmitted SSB resources is increased.

As one embodiment, the first information block indicates a change in time-domain position of a transmitted SSB resource.

As one embodiment, the first information block indicates a handover or change of an SSB resource configuration on the first cell.

As one embodiment, the first information block indicates a handover or change of an SSB resource transmitted on the first cell.

As one embodiment, the first information block indicates an SSB resource used for the synchronization of the first cell.

As one embodiment, the first information block indicates that an SSB resource used for the synchronization of the first cell is activated.

As one embodiment, the first information block indicates that an SSB resource used for the synchronization of the first cell is transmitted.

As one embodiment, the first information block indicates a handover or change of an SSB resource used for the synchronization of the first cell.

As one embodiment, in response to receiving the first information block, only the first SSB resource configuration amongst the plurality of SSB resource configurations is used for determining a transmitted SSB resource.

As one embodiment, the first SSB resource configuration is used for determining the number of transmitted SSB resources.

As one embodiment, the first SSB resource configuration is used for determining a time-domain position of a transmitted SSB resource.

As one embodiment, the first SSB resource configuration is used for determining that the transmitted SSB resource is on the first cell.

As one embodiment, the first SSB resource configuration is used for determining that a transmitted SSB resource is on one cell other than the first cell.

As one embodiment, the first signaling is a higher layer signaling.

As one embodiment, the first signaling comprises an RRC signaling.

As one embodiment, the first signaling is an RRC signaling.

As one embodiment, the first signaling comprises information in at least one field in one RRC IE.

As one embodiment, the first signaling comprises IE ConfiguredGrantConfig.

As one embodiment, the first signaling is IE ConfiguredGrantConfig.

As one embodiment, the first signaling comprises rrc-ConfiguredUplinkGrant.

As one embodiment, the first signaling is an RAR (Random Access Response) uplink grant (UL grant) signaling.

As one embodiment, the first signaling is a fallback RAR uplink grant (UL grant) signaling.

As one embodiment, the first signaling is a physical layer signaling.

As one embodiment, the first signaling comprises a DCI signaling.

As one embodiment, the first signaling is a DCI signaling.

As one embodiment, the first signaling comprises one or more DCI fields in DCI.

As one embodiment, the first signaling is a DCI signaling, and a CRC (Cyclic Redundancy Check) of the first signaling is scrambled by a C (Cell)-RNTI (Radio Network Temporary Identifier).

As one embodiment, the first signaling is a DCI signaling, and a CRC of the first signaling is scrambled by an MCS (Modulation and Coding Scheme)-C-RNTI.

As one embodiment, the first signaling is a DCI signaling, and a CRC of the first signaling is scrambled by a CS (Configured Scheduling)-RNTI.

As one embodiment, the first signaling is a DCI signaling, and a format of the first signaling is DCI format 0_0.

As one embodiment, the first signaling is a DCI signaling, and a format of the first signaling is DCI format 0_1.

As one embodiment, the first signaling is a DCI signaling, and a format of the first signaling is DCI format 0_2.

As one embodiment, the first signaling is a DCI signaling, and a format of the first signaling is DCI format 0_0 or 0_1.

As one embodiment, the first signaling is a DCI signaling, and a format of the first signaling is DCI format 0_1 or 0_2.

As one embodiment, the first signaling is a DCI signaling, and a format of the first signaling is DCI format 0_0 or 0_1 or 0_2.

As one embodiment, the first signaling is a DCI signaling, and a format of the first signaling is DCI format 0_0 scrambled by a TC-RNTI.

As one embodiment, the first signaling indicates that the first node sends the first signal.

As one embodiment, the first signaling indicates that the first node allows to send the first signal.

As one embodiment, the first signaling indicates that the first node sends the first signal on the first cell.

As one embodiment, the first signaling comprises a TDRA (Time Domain Resource Assignment) field.

As one embodiment, the first signaling is a DCI signaling, and a TDRA field of the first signaling is used for determining a time domain resource of the first signal.

As one embodiment, the first signaling comprises a PUSCH time resource allocation field.

As one embodiment, the first signaling is an RAR uplink grant (UL grant) signaling or a fallback RAR uplink grant (UL grant) signaling, and a PUSCH time resource allocation field of the first signaling is used for determining a time domain resource of the first signal.

As one embodiment, the first signal is a PUSCH transmission.

As one embodiment, the first signal is a PUSCH transmission, and the first signal comprises one TB (Transport Block).

As one embodiment, the first signal is a PUSCH transmission, and the first signal comprises a CSI report.

As one embodiment, the first signal is a PUSCH transmission, and the first signal comprises one TB and does not comprise a CSI report.

As one embodiment, the first signal is a PUSCH transmission, and the first signal comprises one TB and comprises a CSI report.

As one embodiment, the first signal is a PUSCH transmission, and the first signal comprises a CSI report and does not comprise a TB.

As one embodiment, the first signal is a PUSCH transmission of PUSCH repetition type A.

As one embodiment, the first signaling is an RAR uplink grant (UL grant) signaling, and the first signal is a PUSCH transmission of PUSCH repetition type A.

As one embodiment, the first signaling is a fallback RAR uplink grant (UL grant) signaling, and the first signal is a PUSCH transmission of PUSCH repetition type A.

As one embodiment, the first signaling is a DCI signaling, and the first signal is a PUSCH transmission of PUSCH repetition type A.

As one embodiment, the first signaling is a DCI signaling, a format of the first signaling is DCI format 0_1 or 0_2, and the first signal is a PUSCH transmission of PUSCH repetition type A.

As one embodiment, the first signaling is a DCI signaling, a format of the first signaling is DCI format 0_0 scrambled by a TC-RNTI, and the first signal is a PUSCH transmission of PUSCH repetition type A.

As one embodiment, the first signal is a PUSCH transmission of PUSCH repetition type B.

As one embodiment, the first signaling is a DCI signaling, and the first signal is a PUSCH transmission of PUSCH repetition type B.

As one embodiment, the first signaling is a DCI signaling, a format of the first signaling is DCI format 0_1 or 0_2, and the first signal is a PUSCH transmission of PUSCH repetition type B.

As one embodiment, for the specific definition of PUSCH repetition type A, refer to Chapter 6 of 3GPP TS 38.214.

As one embodiment, for the specific definition of PUSCH repetition type B, refer to Chapter 6 of 3GPP TS 38.214.

As one embodiment, the first signal is a PUSCH transmission of TB processing over multiple slots.

As one embodiment, the first signaling is a DCI signaling, and the first signal is a PUSCH transmission of TB processing over multiple slots.

As one embodiment, the first signaling is a DCI signaling, and a format of the first signaling is DCI format 0_1 or 0_2, and the first signal is a PUSCH transmission of TB processing over multiple slots.

As one embodiment, for the specific definition of TB processing over multiple slots, refer to Chapter 6 of 3GPP TS 38.214.

As one embodiment, the first signal is a PUSCH transmission, and a PUSCH mapping type of the first signal is one of Type A or Type B.

As one embodiment, for the specific definition of a PUSCH mapping type, refer to Chapter 6 of 3GPP TS 38.214.

As one embodiment, the first signal is a PUSCH transmission of PUSCH repetition type A, and a PUSCH mapping type of the first signal is one of Type A or Type B.

As one embodiment, the first signal is a PUSCH transmission of PUSCH repetition type A, and a PUSCH mapping type of the first signal is Type A.

As one embodiment, the first signal is a PUSCH transmission of PUSCH repetition type A, and a PUSCH mapping type of the first signal is Type B.

As one embodiment, the first signal is a PUSCH transmission of PUSCH repetition type B, and a PUSCH mapping type of the first signal is Type B.

As one embodiment, the first signal is a PUSCH transmission of TB processing over multiple slots, and a PUSCH mapping type of the first signal is one of Type A or Type B.

As one embodiment, the first signal is a PUSCH transmission of TB processing over multiple slots, and a PUSCH mapping type of the first signal is Type A.

As one embodiment, the first signal is a PUSCH transmission of TB processing over multiple slots, and a PUSCH mapping type of the first signal is Type B.

As one embodiment, the meaning of "a time domain resource occupied by the first signal depends on only the first SSB resource configuration amongst the plurality of SSB resource configurations" comprises: a time domain resource occupied by the first signal depends on all SSB resources indicated by only the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a time domain resource occupied by the first signal does not depend on any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a time domain resource occupied by the first signal does not depend on an SSB resource indicated by any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a time domain resource occupied by the first signal is unrelated to any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a time domain resource occupied by the first signal is unrelated to an SSB resource indicated by any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a

25        **EP 4 679 912 A1**        26

time domain resource occupied by the first signal is different from all SSB resources indicated by only the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: the first signal does not overlap with all SSB resources indicated by only the first SSB resource configuration amongst the plurality of SSB resource configurations in the time domain.

As one embodiment, the meaning of "a time domain resource occupied by the first signal depends on only the first SSB resource configuration amongst the plurality of SSB resource configurations" comprises: the first signal does not overlap with any one of all SSB resources indicated by only the first SSB resource configuration amongst the plurality of SSB resource configurations in the time domain.

As one embodiment, the meaning of "a time domain resource occupied by the first signal depends on only the first SSB resource configuration amongst the plurality of SSB resource configurations" comprises: the first signal is orthogonal to all SSB resources indicated by only the first SSB resource configuration amongst the plurality of SSB resource configurations in the time domain.

As one embodiment, the meaning of "a time domain resource occupied by the first signal depends on only the first SSB resource configuration amongst the plurality of SSB resource configurations" comprises: the first signal is orthogonal to any one of all SSB resources indicated by only the first SSB resource configuration amongst the plurality of SSB resource configurations in the time domain.

As one embodiment, the meaning of "a time domain resource occupied by the first signal depends on only the first SSB resource configuration amongst the plurality of SSB resource configurations" comprises: all SSB resources indicated by only the first SSB resource configuration amongst the plurality of SSB resource configurations do not belong to a time domain resource occupied by the first signal.

As one embodiment, the meaning of "a time domain resource occupied by the first signal depends on only the first SSB resource configuration amongst the plurality of SSB resource configurations" comprises: the first signal does not belong to all SSB resources indicated by only the first SSB resource configuration amongst the plurality of SSB resource configurations in the time domain.

As one embodiment, the meaning of "a time domain resource occupied by the first signal depends on only the first SSB resource configuration amongst the plurality of SSB resource configurations" comprises: a slot to which a time domain resource occupied by the first signal belongs depends on all SSB resources indicated by only the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a slot to which a time domain resource occupied by the first signal belongs does not depend on any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a slot to which a time domain resource occupied by the first signal belongs does not depend on an SSB resource indicated by any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a slot to which a time domain resource occupied by the first signal belongs is unrelated to any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a slot to which a time domain resource occupied by the first signal belongs is unrelated to an SSB resource indicated by any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a slot to which a time domain resource occupied by the first signal belongs is different from slots to which all SSB resources indicated by only the first SSB resource configuration amongst the plurality of SSB resource configurations belong.

As one embodiment, the meaning of "a time domain resource occupied by the first signal depends on only the first SSB resource configuration amongst the plurality of SSB resource configurations" comprises: a slot to which a time domain resource occupied by the first signal belongs does not overlap with slots to which all SSB resources indicated by only the first SSB resource configuration amongst the plurality of SSB resource configurations belong.

As one embodiment, the meaning of "a time domain resource occupied by the first signal depends on only the first SSB resource configuration amongst the

14

plurality of SSB resource configurations" comprises: a slot to which a time domain resource occupied by the first signal belongs does not overlap with a slot to which any SSB resource indicated by only the first SSB resource configuration amongst the plurality of SSB resource configurations belongs.

As one embodiment, the meaning of "a time domain resource occupied by the first signal depends on only the first SSB resource configuration amongst the plurality of SSB resource configurations" comprises: a slot to which a time domain resource occupied by the first signal belongs is orthogonal to slots to which all SSB resources indicated by only the first SSB resource configuration amongst the plurality of SSB resource configurations belong.

As one embodiment, the meaning of "a time domain resource occupied by the first signal depends on only the first SSB resource configuration amongst the plurality of SSB resource configurations" comprises: a slot to which a time domain resource occupied by the first signal belongs is orthogonal to a slot to which any SSB resource indicated by only the first SSB resource configuration amongst the plurality of SSB resource configurations belongs.

As one embodiment, the meaning of "a time domain resource occupied by the first signal depends on only the first SSB resource configuration amongst the plurality of SSB resource configurations" comprises: a symbol occupied by the first signal in the time domain depends on all SSB resources indicated by only the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a symbol occupied by the first signal in the time domain does not depend on any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a symbol occupied by the first signal in the time domain does not depend on an SSB resource indicated by any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a symbol occupied by the first signal in the time domain is unrelated to any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a symbol occupied by the first signal in the time domain is unrelated to an SSB resource indicated by any SSB resource configuration other than the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a symbol occupied by the first signal in the time domain is different from symbols occupied by all SSB resources indicated by only the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a symbol occupied by the first signal in the time domain does not overlap with symbols occupied by all SSB resources indicated by only the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: a symbol occupied by the first signal in the time domain does not overlap with a symbol occupied by any SSB resource indicated by only the first SSB resource configuration in the plurality of SSB resource configurations.

As one embodiment, the meaning of "a time domain resource occupied by the first signal depends on only the first SSB resource configuration amongst the plurality of SSB resource configurations" comprises: symbols occupied by the first signal in the time domain are all orthogonal to symbols occupied by all SSB resources indicated by only the first SSB resource configuration amongst the plurality of SSB resource configurations.

As one embodiment, the meaning of "a time domain resource occupied by the first signal depends on only the first SSB resource configuration amongst the plurality of SSB resource configurations" comprises: symbols occupied by the first signal in the time domain are all orthogonal to symbols occupied by any SSB resource indicated by only the first SSB resource configuration amongst the plurality of SSB resource configurations.

As one embodiment, the meaning of "a time domain resource occupied by the first signal depends on all SSB resources indicated by the plurality of SSB resource configurations" comprises: a time domain resource occupied by the first signal depends on all SSB resources indicated by the plurality of SSB resource configurations.

As one embodiment, the meaning of "a time domain resource occupied by the first signal depends on all SSB resources indicated by the plurality of SSB resource configurations" comprises: a time domain resource occupied by the first signal is related to all SSB resources indicated by the plurality of SSB resource configurations.

As one embodiment, the meaning of "a time domain resource occupied by the first signal depends on all SSB resources indicated by the plurality of SSB resource configurations" comprises: a time domain resource occupied by the first signal is different from all SSB resources indicated by the plurality of SSB resource configurations.

As one embodiment, the meaning of "a time domain resource occupied by the first signal depends on all SSB resources indicated by the plurality of SSB resource configurations" comprises: a time domain resource occupied by the first signal does not overlap with all SSB resources indicated by the plurality of SSB resource configurations in the time domain.

As one embodiment, the meaning of "a time domain resource occupied by the first signal depends on all SSB resources indicated by the plurality of SSB resource configurations" comprises: a time domain resource occupied by the first signal is orthogonal to all SSB resources indicated by the plurality of SSB resource configurations in the time domain.

As one embodiment, the meaning of "a time domain resource occupied by the first signal depends on all SSB resources indicated by the plurality of SSB resource configurations" comprises: a time domain resource occupied by the first signal is orthogonal to all SSB resources indicated by each SSB resource configuration amongst the plurality of SSB resource configurations in the time domain.

As one embodiment, the meaning of "a time domain resource occupied by the first signal depends on all SSB resources indicated by the plurality of SSB resource configurations" comprises: a slot to which a time domain resource occupied by the first signal belongs depends on all SSB resources indicated by the plurality of SSB resource configurations.

As one embodiment, the meaning of "a time domain resource occupied by the first signal depends on all SSB resources indicated by the plurality of SSB resource configurations" comprises: a slot to which a time domain resource occupied by the first signal belongs is related to all SSB resources indicated by the plurality of SSB resource configurations.

As one embodiment, the meaning of "a time domain resource occupied by the first signal depends on all SSB resources indicated by the plurality of SSB resource configurations" comprises: a slot to which a time domain resource occupied by the first signal belongs is different from slots to which all SSB resources indicated by the plurality of SSB resource configurations belong.

As one embodiment, the meaning of "a time domain resource occupied by the first signal depends on all SSB resources indicated by the plurality of SSB resource configurations" comprises: a slot to which a time domain resource occupied by the first signal belongs does not overlap with slots to which all SSB resources indicated by the plurality of SSB resource configurations belong.

As one embodiment, the meaning of "a time domain resource occupied by the first signal depends on all SSB resources indicated by the plurality of SSB resource configurations" comprises: a slot to which a time domain resource occupied by the first signal belongs is orthogonal to slots to which all SSB resources indicated by the plurality of SSB resource configurations belong.

As one embodiment, the meaning of "a time domain resource occupied by the first signal depends on all SSB resources indicated by the plurality of SSB resource configurations" comprises: a slot to which a time domain resource occupied by the first signal belongs is orthogonal to slots to which all SSB resources indicated by each SSB resource configuration amongst the plurality of SSB resource configurations belong.

As one embodiment, the meaning of "a time domain resource occupied by the first signal depends on all SSB resources indicated by the plurality of SSB resource configurations" comprises: a symbol occupied by the first signal in the time domain depends on all SSB resources indicated by the plurality of SSB resource configurations.

As one embodiment, the meaning of "a time domain resource occupied by the first signal depends on all SSB resources indicated by the plurality of SSB resource configurations" comprises: a symbol occupied by the first signal in the time domain is related to all SSB resources indicated by the plurality of SSB resource configurations.

As one embodiment, the meaning of "a time domain resource occupied by the first signal depends on all SSB resources indicated by the plurality of SSB resource configurations" comprises: a symbol occupied by the first signal in the time domain is different from symbols occupied by all SSB resources indicated by the plurality of SSB resource configurations.

As one embodiment, the meaning of "a time domain resource occupied by the first signal depends on all SSB resources indicated by the plurality of SSB resource configurations" comprises: a symbol occupied by the first signal in the time domain does not overlap with symbols occupied by all SSB resources indicated by the plurality of SSB resource configurations.

As one embodiment, the meaning of "a time domain resource occupied by the first signal depends on all SSB resources indicated by the plurality of SSB resource configurations" comprises: a symbol occupied by the first signal in the time domain is orthogonal to symbols occupied by all SSB resources indicated by the plurality of SSB resource configurations.

As one embodiment, the meaning of "a time domain resource occupied by the first signal depends on all SSB resources indicated by the plurality of SSB resource configurations" comprises: a symbol occupied by the first signal in the time domain is orthogonal to symbols occupied by all SSB resources indicated by each SSB resource configuration amongst the plurality of SSB resource configurations.

As one embodiment, the phrase "a time domain resource occupied" refers to: a symbol occupied.

As one embodiment, the phrase "a time domain resource occupied" refers to: time occupied.

As one embodiment, the phrase "a time domain resource occupied" refers to: a slot to which it belongs in the time domain.

## Embodiment 2

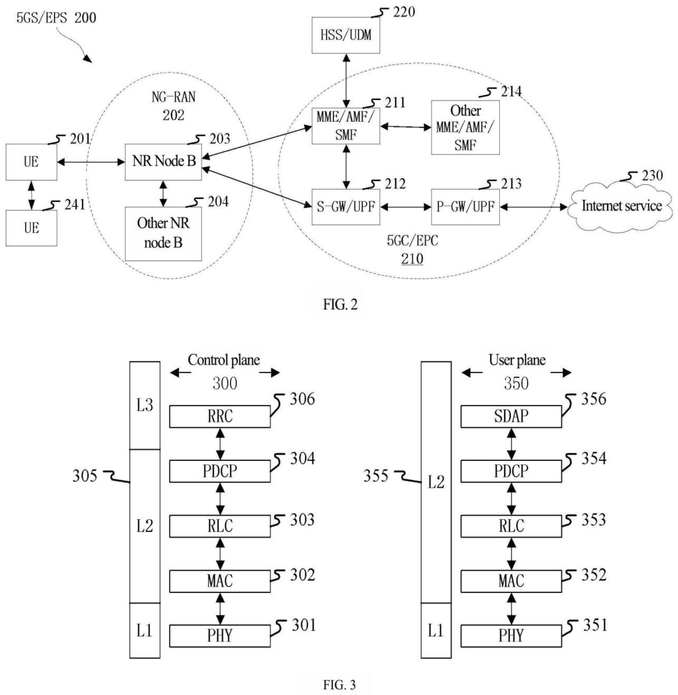

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced), and future 5G systems. The network architecture 200 of the LTE, LTE-A, and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 performing sidelink communication with UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) Node B (gNB) 203 and other gNB204. The gNB203 provides user and control plane protocol termination toward the UE201. The gNB203 may be connected to the other gNB204 via an Xn interface (e.g., backhaul). The gNB203 may also be referred to as a base station, a base transceiver station, a radio base station, a radio transceiver, a transceiver function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, a car, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises operator-corresponding Internet protocol services, which may specifically comprise the Internet, an intranet, an IMS (IP Multimedia Subsystem) and a packet switching service.

As one embodiment, the first node in the present application comprises the UE201.

As one embodiment, the first node in the present application comprises the UE241.

As one embodiment, the second node in the present application comprises the gNB203.

## Embodiment 3

Embodiment 3 illustrates a schematic diagram of an embodiment of a radio protocol architecture for a user plane and a control plane according to one embodiment of the present application, as shown in FIG. 3.

Embodiment 3 shows a schematic diagram of an embodiment of one radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture of the control plane 300 used between a first communication node device (UE, gNB or RSU in V2X) and a second communication node device (gNB, UE or RSU in V2X), or between two pieces of UE using three layers: Layer 1, Layer 2, and Layer 3. The Layer 1 (L1 layer) is the lowest layer and implements various PHY (Physical Layer) signal processing functions. The L1 layer will be referred to as a PHY301 herein. The Layer 2 (L2 layer) 305 is above the PHY301, and is responsible for a link between the first communication node device and the second communication node device, or between two pieces of UE. The L2 layer 305 comprises an MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transmission channels. The MAC sublayer 302 is also responsible for assigning various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises Layer 1 (L1 layer) and Layer 2 (L2 layer). The radio protocol architecture for a first communication node device and a second communication node device in the user plane 350 is substantially the same as the corresponding layers and sublayers in the control plane 300 as for a physical layer 351, a PDCP sublayer 354 in the L2 layer 355, an RLC sublayer 353 in the L2 layer 355, and an MAC sublayer 352 in the L2 layer 355, but the PDCP sublayer 354 also provides header compression for upper-layer data packets to reduce the wireless transmission overhead. The L2 layer 355 in the user plane 350 also comprises an SDAP (Service Data Adaptation Protocol) sublayer 356, and the SDAP sublayer 356 is responsible for mapping between a QoS stream and a DRB (Data Radio Bearer) to support the diversity of services. Although not shown in the figure, the first communication node device may have several upper layers above the L2 layer 355, comprising a network layer (e.g., IP layer) terminating at the P-GW on the network side and an application layer terminating at the other end (e.g., remote UE and a server, etc.) of a connection.

As one embodiment, the radio protocol architecture in FIG. 3 is applicable to the first node in the present application.

As one embodiment, the radio protocol architecture in FIG. 3 is applicable to the second node in the present application.

As one embodiment, the plurality of SSB resource configurations are generated in the RRC sublayer 306.

As one embodiment, the first information block is generated in the RRC sublayer 306.

As one embodiment, the first information block is generated in the MAC sublayer 302.

As one embodiment, the first information block is generated in the MAC sublayer 352.

As one embodiment, the first information block is generated at the PHY301.

As one embodiment, the first information block is generated at the PHY351.

As one embodiment, the first signaling is generated at the PHY301.

As one embodiment, the first signaling is generated at the PHY351.

As one embodiment, the second signaling is generated at the PHY301.

As one embodiment, the second signaling is generated at the PHY351.

As one embodiment, the first signal is generated at the PHY301.

As one embodiment, the first signal is generated at the PHY351.

As one embodiment, the second signal is generated at the PHY301.

As one embodiment, the second signal is generated at the PHY351.

### Embodiment 4

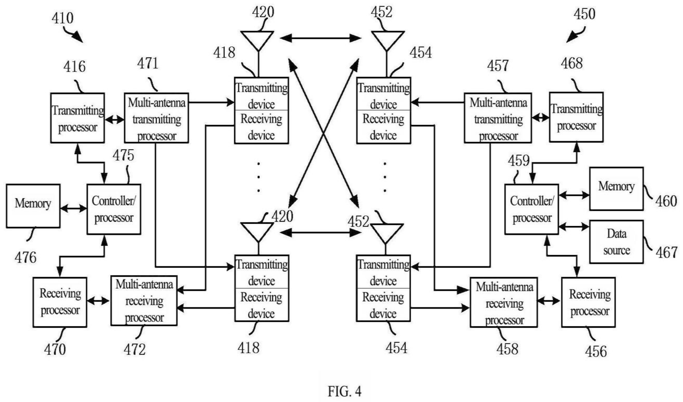

Embodiment 4 exemplifies a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, an upper-layer data packet from a core network is provided to the controller/processor 475. The controller/processor 475 implements the functionality of an L2 layer. In a DL, the controller/processor 475 provides header compression, encryption, packet segmentation and reordering, multiplexing between logical and transmission channels, and radio resource allocation to the second communication device 450 based on various priority metrics. The controller/processor 475 is also responsible for HARQ operations, retransmission of lost packets, and a signaling to the second communication device 450. The transmitting processor 416 and the multi-antenna transmitting processor 471 implement various signal processing functions for the L1 layer (i.e., a physical layer). The transmitting processor 416 implements encoding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, including codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in a time domain and/or a frequency domain, and then uses an inverse fast Fourier transform (IFFT) to generate a physical channel carrying a time domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses the fast Fourier transform (FFT) to convert the baseband multi-carrier symbol stream from the time domain to the frequency domain after the receiving analog precoding/beamforming operation. In the frequency domain, a physical layer data signal and the reference signal are demultiplexed by the receiving processor 456, wherein the reference signal will be used for a channel estimation, and any parallel stream destined for the second communication device 450 recovered after the data signal undergoes multi-antenna detection in the multi-antenna receiving processor 458. The symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In a DL (DownLink), the controller/processor 459 provides demultiplexing between transmission and logical channels, packet reassembly, decryption, header decompression, and control signal processing to recover upper-layer data packets from a core network. The upper-layer data packets are then provided to all protocol layers above the L2 layer. Various control signals may also be provided to an L3 for L3 processing. The controller/processor 459 is also responsible for error detection using an acknowledgement (ACK) and/or negative acknowledgement (NACK) protocol to support HARQ operations.

In the transmission from the second communication device 450 to the first communication device 410, at the second communication device 450, the upper-layer data packets are provided to the controller/processor 459 using the data source 467. The data source 467 represents all protocol layers above the L2 layer. Similar to a sending function at the first communication device 410 described in the DL, the controller/processor 459 implements header compression, encryption, packet segmentation and reordering, and multiplexing between logical and transmission channels based on the radio resource assignment of the first communication device 410, and implements L2 layer functions for the user plane and the control plane. The controller/processor 459 is also responsible for HARQ operations, retransmission of lost packets, and a signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing; and then, the transmitting processor 468 modulates a generated parallel stream into a multi-carrier/single-carrier symbol stream, which is provided to different antennas 452 via the transmitting device 454 after undergoing analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the functions at the first communication device 410 are similar to the receiving functions at the second communication device 450 described in the transmission from the first communication device 410 to the second communication device 450. Each receiving device 418 receives a radio-frequency signal through a corresponding antenna 420 thereof, converts the received radio-frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. The controller/processor 475 provides demultiplexing between transmission and logical channels, packet reassembly, decryption, header decompression and control signal processing to recover upper-layer data packets from the second communication device 450. The upper-layer data packets from the controller/processor 475 may be provided to the core network. The controller/processor 475 is also responsible for error detection using the ACK and/or NACK protocol to support HARQ operations.

As one embodiment, the second communication device 450 comprises: at least one processor and at least one memory, the at least one memory comprising a computer program code; and the at least one memory and the computer program codes are configured to be used together with the at least one processor. The second communication device 450 apparatus at least: receives a plurality of SSB resource configurations, any SSB resource configuration amongst the plurality of SSB resource configurations being used for indicating at least one SSB resource, and the plurality of SSB resource configurations being all associated with a first cell; receives a first information block, the first information block being used for determining a first SSB resource configuration, and the first SSB resource configuration being one of the plurality of SSB resource configurations; in response to receiving the first information block, determines an SSB transmission according to only the first SSB resource configuration amongst the plurality of SSB resource configurations; receives a first signaling on the first cell, the first signaling being used for scheduling a first signal; and sends the first signal on the first cell, wherein a time domain resource occupied by the first signal depends on only the first SSB resource configuration amongst the plurality of SSB resource configurations, or the time domain resource occupied by the first signal depends on all SSB resources indicated by the plurality of SSB resource configurations.

As one embodiment, the second communication device 450 comprises: a memory storing a computer-readable instruction program, the computer-readable instruction program generating actions when executed by at least one processor, the actions comprising: receiving a plurality of SSB resource configurations, any SSB resource configuration amongst the plurality of SSB resource configurations being used for indicating at least one SSB resource, and the plurality of SSB resource configurations being all associated with a first cell; receiving a first information block, the first information block being used for determining a first SSB resource configuration, and the first SSB resource configuration being one of the plurality of SSB resource configurations; in response to receiving the first information block, determining an SSB transmission according to only the first SSB resource configuration amongst the plurality of SSB resource configurations; receiving a first signaling on the first cell, the first signaling being used for scheduling a first signal; and sending the first signal on the first cell, wherein a time domain resource occupied by the first signal depends on only the first SSB resource configuration amongst the plurality of SSB resource configurations, or the time domain resource occupied by the first signal depends on all SSB resources indicated by the plurality of SSB resource configurations.

As one embodiment, the first communication device 410 comprises: at least one processor and at least one memory, the at least one memory comprising a computer program code; and the at least one memory and the computer program codes are configured to be used together with the at least one processor. The first communication device 410 apparatus at least: sends a plurality of SSB resource configurations, any SSB resource configuration amongst the plurality of SSB resource configurations being used for indicating at least one SSB resource, and the plurality of SSB resource configurations being all associated with a first cell; sends a first information block, the first information block being used for determining a first SSB resource configuration, and the first SSB resource configuration being one of the plurality of SSB resource configurations; sends a first signaling on the first cell, the first signaling being used for scheduling a first signal; and receives the first signal on the first cell, wherein in response to receiving the first information block, a recipient of the first information block determines an SSB transmission according to only the first SSB resource configuration amongst the plurality of SSB resource configurations; and a time domain resource occupied by the first signal depends on only the first SSB resource configuration amongst the plurality of SSB resource configurations, or the time domain resource occupied by the first signal depends on all SSB resources indicated by the plurality of SSB resource configurations.

As one embodiment, the first communication device 410 comprises: a memory storing a computer-readable instruction program, the computer-readable instruction program generating actions when executed by at least one processor, the actions comprising: sending a plurality of SSB resource configurations, any SSB resource configuration amongst the plurality of SSB resource configurations being used for indicating at least one SSB resource, and the plurality of SSB resource configurations being all associated with a first cell; sending a first information block, the first information block being used for determining a first SSB resource configuration, and the first SSB resource configuration being one of the plurality of SSB resource configurations; sending a first signaling on the first cell, the first signaling being used for scheduling a first signal; and receiving the first signal on the first cell, wherein in response to receiving the first information block, a recipient of the first information block determines an SSB transmission according to only the first SSB resource configuration amongst the plurality of SSB resource configurations; and a time domain resource occupied by the first signal depends on only the first SSB resource configuration amongst the plurality of SSB resource configurations, or the time domain resource occupied by the first signal depends on all SSB resources indicated by the plurality of SSB resource configurations.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the plurality of SSB resource configurations in the present application; and at least one of {the antenna 420, the transmitting device 418, the transmitting processor 416, the multi-antenna transmitting processor 471, the controller/processor 475, and the memory 476} is used for sending the plurality of SSB resource configurations in the present application.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the transmitting device 454, the transmitting processor 468, the multi-antenna transmitting processor 457, the controller/processor 459, and the memory 460} is used for sending the first signal in the present application; and at least one of {the antenna 420, the receiving device 418, the receiving processor 470, the multi-antenna receiving processor 472, the controller/processor 475, and the memory 476} is used for receiving the first signal in the present application.

As one embodiment, at least one of {the antenna 452, the receiving device 454, the receiving processor 456, the multi-antenna receiving processor 458, the controller/processor 459, the memory 460, and the data source 467} is used for receiving the second signaling in the present application; and at least one of {the antenna 420, the transmitting device 418, the transmitting processor 416, the multi-antenna transmitting processor 471, the controller/processor 475, and the memory 476} is used for sending the second signaling in the present application.

As one embodiment, at least one of {the antenna 452, the transmitting device 454, the transmitting processor 468, the multi-antenna transmitting processor 457, the controller/processor 459, and the memory 460} is used for sending the second signal in the present application; and at least one of {the antenna 420, the receiving device 418, the receiving processor 470, the multi-antenna receiving processor 472, the controller/processor 475, and the memory 476} is used for receiving the second signal in the present application.

**Embodiment 5**

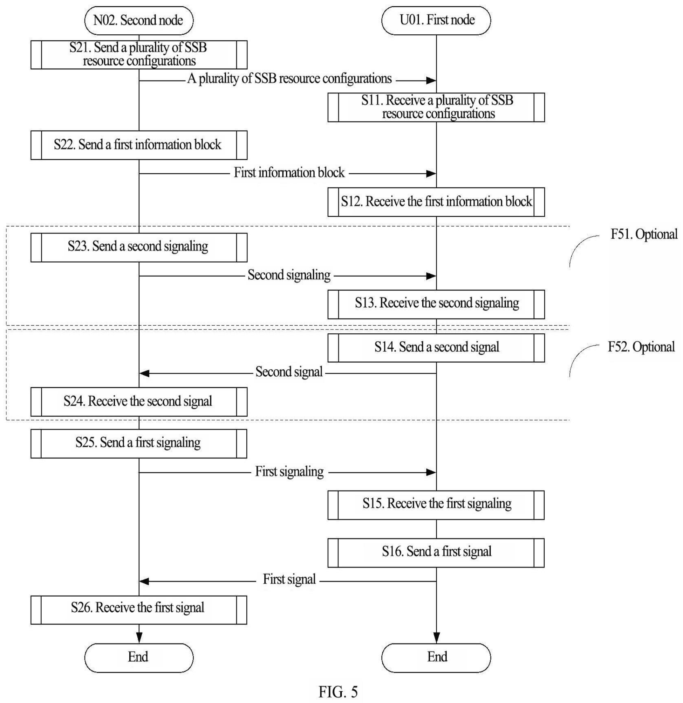

Embodiment 5 illustrates a flowchart of a wireless transmission according to one embodiment of the present application, as shown in FIG. 5. In FIG. 5, a first node U01 and a second node N02 are two communication nodes transmitted through an air interface, respectively, wherein a step in a dash box F51 is optional, and a step in a dash box F52 is optional.

For **the first node U01,** a plurality of SSB resource configurations are received in step S11; a first information block is received in step S12; a second signaling is received in step S13; a second signal is sent in step S14; a first signaling is received in step S15; and a first signal is sent in step S16.

For **the second node N02,** a plurality of SSB resource configurations are sent in step S21; a first information block is sent in step S22; the second signaling is sent in step S23; a second signal is received in step S24; a first signaling is sent in step S25; and a first signal is received in step S26.

In Embodiment 5, any SSB resource configuration amongst the plurality of SSB resource configurations is used for indicating at least one SSB resource, and the plurality of SSB resource configurations are all associated with the first cell; the first information block is used for determining a first SSB resource configuration, and the first SSB resource configuration is one of the plurality of SSB resource configurations; in response to receiving the first information block, an SSB transmission is determined according to only the first SSB resource configuration amongst the plurality of SSB resource configurations; a first signaling is received on the first cell, the first signaling being used for scheduling a first signal; and the first signal is sent on the first cell, wherein a time domain resource occupied by the first signal depends on only the first SSB resource configuration amongst the plurality of SSB resource configurations, or the time domain resource occupied by the first signal depends on all SSB resources indicated by the plurality of SSB resource configurations; and the second signaling is used for scheduling a second signal.

As one embodiment, the first node U01 is the first node in the present application.

As one embodiment, the second node N02 is the second node in the present application.

As one embodiment, steps in a dotted box F51 and a dotted box F52 are optional.

As one embodiment, a step in a dotted box F51 exists, and a step in a dotted box F52 exists.

As one embodiment, a step in a dotted box F51 does not exist, and a step in a dotted box F52 does not exist.

As one embodiment, an air interface between the second node N2 and the first node U1 comprises a wireless interface between a base station device and user equipment.

As one embodiment, an air interface between the second node N2 and the first node U1 comprises a wireless interface between a relay node device and user equipment.

As one embodiment, an air interface between the second node N2 and the first node U1 comprises a wireless interface between user equipment and user equipment.

As one embodiment, the first information block is transmitted in a PDSCH (Physical Downlink Shared Channel).

As one embodiment, the first information block is transmitted in a PDCCH (Physical Downlink Control Channel).

As one embodiment, the first information block is transmitted in a PDSCH or PDCCH.

As one embodiment, the plurality of SSB resource configurations are transmitted on a PDSCH.

As one embodiment, the first signaling is transmitted in a PDCCH.

As one embodiment, the first signal is transmitted on a PUSCH.

As one embodiment, when a step in a dashed box F51 exists, the second signaling is transmitted in a PDCCH.

As one embodiment, when a step in a dashed box F52 exists, the second signal is transmitted on a PUSCH.

As one embodiment, the first information block is used by the first node U01 for determining the first SSB resource configuration.

**Embodiment 6**

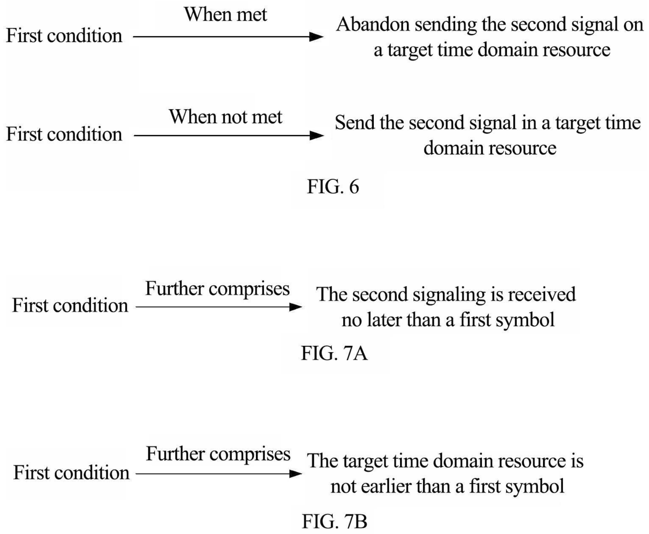

Embodiment 6 illustrates a schematic diagram of a first condition according to one embodiment of the present application, as shown in FIG. 6.

In Embodiment 6, the first node receives a second signaling, the second signaling being used for scheduling a second signal; abandons sending the second signal on a target time domain resource when a first condition is met; and sending the second signal on the target time domain resource when the first condition is not met, wherein the time domain resource occupied by the first signal depends on only the first SSB resource configuration amongst the plurality of SSB resource configurations; the target time domain resource depends on one SSB resource configuration other than the first SSB resource configuration amongst the plurality of SSB resource configurations; and the first condition comprises: the target time domain resource overlaps with an SSB resource determined by the first SSB resource configuration in a time domain.

As one embodiment, the second signaling is a higher layer signaling.

As one embodiment, the second signaling comprises an RRC signaling.

As one embodiment, the second signaling is an RRC signaling.

As one embodiment, the second signaling comprises information in at least one field in one RRC IE.

As one embodiment, the second signaling comprises IE ConfiguredGrantConfig.

As one embodiment, the second signaling is IE ConfiguredGrantConfig.

As one embodiment, the second signaling comprises rrc-ConfiguredUplinkGrant.

As one embodiment, the second signaling is an RAR uplink grant (UL grant) signaling.

As one embodiment, the second signaling is a fallback RAR uplink grant (UL grant) signaling.

As one embodiment, the second signaling is a physical layer signaling.

As one embodiment, the second signaling comprises a DCI signaling.

As one embodiment, the second signaling is a DCI signaling.

As one embodiment, the second signaling comprises one or more DCI fields in DCI.

As one embodiment, the second signaling is a DCI signaling, and a CRC of the second signaling is scrambled by a C-RNTI.

As one embodiment, the second signaling is a DCI signaling, and a CRC of the second signaling is scrambled by an MCS-C-RNTI.

As one embodiment, the second signaling is a DCI signaling, and a CRC of the second signaling is scrambled by a CS-RNTI.

As one embodiment, the second signaling is a DCI signaling, and a format of the second signaling is DCI format 0_0.

As one embodiment, the second signaling is a DCI signaling, and a format of the second signaling is DCI format 0_1.

As one embodiment, the second signaling is a DCI signaling, and a format of the second signaling is DCI format 0_2.

As one embodiment, the second signaling is a DCI signaling, and a format of the second signaling is DCI format 0_0 or 0_1.

As one embodiment, the second signaling is a DCI signaling, and a format of the second signaling is DCI format 0_1 or 0_2.

As one embodiment, the second signaling is a DCI signaling, and a format of the second signaling is DCI format 0_0 or 0_1 or 0_2.

As one embodiment, the second signaling is a DCI signaling, and a format of the second signaling is DCI format 0_0 scrambled by a TC-RNTI.

As one embodiment, the second signaling indicates that the first node sends the second signal.

As one embodiment, the second signaling indicates that the first node allows to send the second signal.

As one embodiment, the second signaling indicates that the first node sends the second signal on the first cell.

As one embodiment, the second signaling comprises a TDRA field.

As one embodiment, the second signaling is a DCI signaling, and a TDRA field of the second signaling is used for determining the target time domain resource.

As one embodiment, the second signaling comprises a PUSCH time resource allocation field.

As one embodiment, the second signaling is an RAR uplink grant (UL grant) signaling or a fallback RAR uplink grant (UL grant) signaling, and a PUSCH time resource allocation field of the second signaling is used for determining the target time domain resource.

As one embodiment, the target time domain resource comprises a time domain resource of the second signal.

As one embodiment, the target time domain resource is a time domain resource of the second signal.

As one embodiment, the second signal is a PUSCH transmission.

As one embodiment, the second signal is a PUSCH transmission, and the second signal comprises one TB (Transport Block).

As one embodiment, the second signal is a PUSCH transmission, and the second signal comprises a CSI report.

As one embodiment, the second signal is a PUSCH transmission, and the second signal comprises one TB and does not comprise a CSI report.

As one embodiment, the second signal is a PUSCH transmission, and the second signal comprises one TB and comprises a CSI report.

As one embodiment, the second signal is a PUSCH transmission, and the second signal comprises a CSI report and does not comprise a TB.

As one embodiment, the second signal is a PUSCH transmission of PUSCH repetition type A.

As one embodiment, the second signal is a PUSCH transmission of PUSCH repetition type B.

As one embodiment, the second signal is a PUSCH transmission of TB processing over multiple slots.

As one embodiment, the second signal is a PUSCH transmission, and a PUSCH mapping type of the first signal is one of Type A or Type B.

As one embodiment, the second signal is a PUSCH transmission of PUSCH repetition type A, and a PUSCH mapping type of the second signal is one of Type A or Type B.

As one embodiment, the second signal is a PUSCH transmission of PUSCH repetition type A, and a PUSCH mapping type of the second signal is Type A.

As one embodiment, the second signal is a PUSCH transmission of PUSCH repetition type A, and a PUSCH mapping type of the second signal is Type B.

As one embodiment, the second signal is a PUSCH transmission of PUSCH repetition type B, and a PUSCH mapping type of the second signal is Type B.

As one embodiment, the second signal is a PUSCH transmission of TB processing over multiple slots, and a PUSCH mapping type of the second signal is one of Type A or Type B.

As one embodiment, the second signal is a PUSCH transmission of TB processing over multiple slots, and a PUSCH mapping type of the second signal is Type A.

As one embodiment, the second signal is a PUSCH transmission of TB processing over multiple slots, and a PUSCH mapping type of the second signal is Type B.

As one embodiment, the second signal is abandoned from being sent on the target time domain resource when the first condition is met.

As one embodiment, the second signal is sent on the target time domain resource when the first condition is not met.

As one embodiment, the first condition further comprises that the second signaling is received earlier than a first symbol, and the first symbol depends on a symbol occupied by the first information block.

As one embodiment, the first condition further comprises that the target time domain resource is later than a first symbol, and the first symbol depends on a symbol occupied by the first information block.

As one embodiment, the meaning of "the target time domain resource depends on one SSB resource configuration other than the first SSB resource configuration amongst the plurality of SSB resource configurations" comprises: the target time domain resource does not depend on the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the target time domain resource only depends on one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the target time domain resource depends on only one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the target time domain resource depends on an SSB resource indicated by one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the target time domain resource depends on all SSB resources indicated by one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the target time domain resource depends on partial SSB resources indicated by one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the target time domain resource depends on one or more SSB resources indicated by one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the target time domain resource is different from a time domain resource occupied by an SSB resource indicated by one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the target time domain resource does not overlap with a time domain resource occupied by an SSB resource indicated by one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the target time domain resource is orthogonal to a time domain resource occupied by an SSB resource indicated by one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the target time domain resource is composed of a second available slot group, the second available slot group comprises at least one available slot, and the second available slot group depends on one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: one or more available slots in the second available slot group depend on one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: partial or all available slots in the second available slot group depend on one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: each available slot in the second available slot group depends on one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: available slots in the second available slot group do not overlap with SSB resources indicated by one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: available slots in the second available slot group do not overlap with slots where an SSB resource indicated by one SSB resource configuration other than the first SSB resource configuration amongst the plurality of SSB resource configurations is located.

As one embodiment, the meaning of "the target time domain resource depends on one SSB resource configuration other than the first SSB resource configuration amongst the plurality of SSB resource configurations" comprises: available slots in the second available slot group are different from slots where an SSB resource indicated by one SSB resource configuration other than the first SSB resource configuration amongst the plurality of SSB resource configurations is located.

As one embodiment, the meaning of "the target time domain resource depends on one SSB resource configuration other than the first SSB resource configuration amongst the plurality of SSB resource configurations" comprises: available slots in the second available slot group do not overlap with symbols occupied by an SSB resource indicated by one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the second signaling is used for indicating a second symbol set, the target time domain resource comprises at least one symbol in the second symbol set that does not belong to a second invalid symbol group, and the second invalid symbol group depends on one SSB resource configuration other than the first SSB resource configuration amongst the plurality of SSB resource configurations.

As one embodiment, the second signaling comprises a TDRA (Time Domain Resource Assignment) field, and the TDRA field comprised in the second signaling is used for indicating the second symbol set.

As one embodiment, for the specific definition of the TDRA field, refer to Chapter 7.3.1 of 3GPP TS 38.212.

As one embodiment, the meaning of "the target time domain resource depends on one SSB resource configuration other than the first SSB resource configuration amongst the plurality of SSB resource configurations" comprises: one or more symbols in the second invalid symbol group depend on one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: partial or all symbols in the second invalid symbol group depend on one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: all symbols in the second invalid symbol group depend on one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the second invalid symbol group comprises one or more symbols occupied by an SSB resource indicated by one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the second invalid symbol group comprises partial or all symbols occupied by an SSB resource indicated by one SSB resource configuration other than the first SSB resource configuration amongst the plurality of SSB resource configurations.

As one embodiment, the meaning of "the target time domain resource depends on one SSB resource configuration other than the first SSB resource configuration amongst the plurality of SSB resource configurations" comprises: the second invalid symbol group comprises all symbols occupied by an SSB resource indicated by one SSB resource configuration other than the first SSB resource configuration amongst the plurality of SSB resource configurations.

As one embodiment, the first condition comprises: the target time domain resource overlaps with an SSB resource determined by the first SSB resource configuration in the time domain.

As one embodiment, the first condition comprises: part or all of the target time domain resources overlap with an SSB resource determined by the first SSB resource configuration in the time domain.

As one embodiment, the first condition comprises: any part of the target time domain resources overlaps with an SSB resource determined by the first SSB resource configuration in the time domain.

As one embodiment, the first condition comprises: the target time domain resource is not orthogonal to an SSB resource determined by the first SSB resource configuration in the time domain.

As one embodiment, the first condition comprises: part or all of the target time domain resources are not orthogonal to an SSB resource determined by the first SSB resource configuration in the time domain.

As one embodiment, the first condition comprises: any part of the target time domain resources is not orthogonal to an SSB resource determined by the first SSB resource configuration in the time domain.

As one embodiment, the first condition comprises: a slot to which the target time domain resource belongs overlaps with an SSB resource determined by the first SSB resource configuration.

As one embodiment, the first condition comprises: a slot to which the target time domain resource belongs overlaps with a slot where an SSB resource determined by the first SSB resource configuration is located in the time domain.

As one embodiment, the first condition comprises: a slot to which the target time domain resource belongs is the same as a slot where an SSB resource determined by the first SSB resource configuration is located.

As one embodiment, the first condition comprises: a symbol occupied by the target time domain resource overlaps with an SSB resource determined by the first SSB resource configuration.

As one embodiment, the first condition comprises: a symbol occupied by the target time domain resource overlaps with a symbol occupied by an SSB resource determined by the first SSB resource configuration.

As one embodiment, the first condition comprises: a symbol occupied by the target time domain resource is not orthogonal to a symbol occupied by an SSB resource determined by the first SSB resource configuration.

As one embodiment, the first condition comprises: a symbol occupied by the target time domain resource is the same as a symbol occupied by an SSB resource determined by the first SSB resource configuration.

## Embodiments 7A-7B

Embodiments 7A-7B respectively illustrate schematic diagrams of a first condition according to still another embodiment of the present application, as shown in FIGs. 7A-7B.

In Embodiment 7A, the first condition further comprises that the second signaling is received no later than a first symbol, and the first symbol depends on a symbol occupied by the first information block.

In Embodiment 7B, the first condition further comprises that the target time domain resource is not earlier than a first symbol, and the first symbol depends on a symbol occupied by the first information block.

As one embodiment, the first condition comprises that the second signaling is received no later than the first symbol.

As one embodiment, the first condition comprises that the second signaling is received earlier than the first symbol.

As one embodiment, the first condition comprises that the target time domain resource is not earlier than the first symbol.

As one embodiment, the first condition comprises that the target time domain resource is later than the first symbol.

As one embodiment, the first symbol is one symbol amongst symbols occupied by the first information block.

As one embodiment, the first symbol is the first one of symbols occupied by the first information block.

As one embodiment, the first symbol is the last one of symbols occupied by the first information block.

As one embodiment, the first symbol is one symbol behind the last one of symbols occupied by the first information block.

As one embodiment, the first symbol is one symbol behind a target symbol.

As one embodiment, the target symbol is the last one of symbols occupied by HARQ-ACK information sent for the first information block.

As one embodiment, HARQ-ACK information sent for the first information block is borne by a PUCCH (Physical Uplink Control Channel).

As one embodiment, HARQ-ACK information sent for the first information block is borne by a PUSCH.

As one embodiment, the first symbol is one symbol at least L symbols behind the target symbol.

As one embodiment, the first symbol is one symbol L symbols behind the target symbol.

As one embodiment, the first symbol is one symbol which is at least L symbols behind the target symbol and is in the first one of slots.

As one embodiment, the first symbol is a start symbol which is at least L symbols behind the target symbol and is in the first one of slots.

As one embodiment, the first symbol is a symbol previous to a start symbol which is at least L symbols behind the target symbol and is in the first one of slots.

As one embodiment, L is a non-negative integer.

As one embodiment, L is a positive integer.

As one embodiment, L is configurable.

As one embodiment, L is configured by a higher layer parameter.

As one embodiment, L is configured by an RRC parameter.

## Embodiment 8

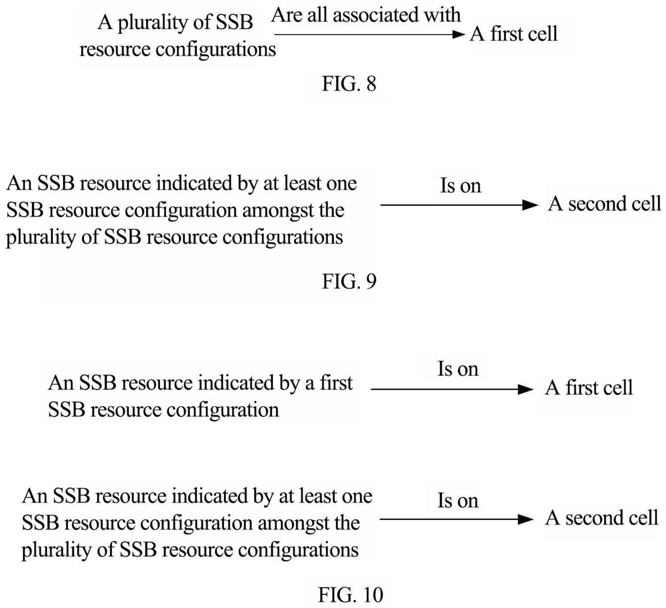

Embodiment 8 illustrates a schematic diagram of a plurality of SSB resource configurations according to one embodiment of the present application, as shown in FIG. 8.

In Embodiment 8, the meaning of the sentence "the plurality of SSB resource configurations are all associated with a first cell" comprises: all SSB resources respectively indicated by the plurality of SSB resource configurations are all on the first cell.

As one embodiment, the meaning of the sentence "the plurality of SSB resource configurations are all associated with a first cell" comprises: all SSB resources respectively indicated by the plurality of SSB resource configurations are transmitted on the first cell.

As one embodiment, the meaning of the sentence "the plurality of SSB resource configurations are all associated with a first cell" comprises: all SSB resources indicated by any SSB resource configuration amongst the plurality of SSB resource configurations are all on the first cell.

As one embodiment, the meaning of the sentence "the plurality of SSB resource configurations are all associated with a first cell" comprises: all SSB resources indicated by any SSB resource configuration amongst the plurality of SSB resource configurations are all transmitted on the first cell.

As one embodiment, the meaning of the sentence "the plurality of SSB resource configurations are all associated with a first cell" comprises: all SSB resources indicated by each SSB resource configuration amongst the plurality of SSB resource configurations are all on the first cell.

As one embodiment, the meaning of the sentence "the plurality of SSB resource configurations are all associated with a first cell" comprises: all SSB resources indicated by each SSB resource configuration amongst the plurality of SSB resource configurations are all transmitted on the first cell.

As one embodiment, the meaning of the sentence "the plurality of SSB resource configurations are all associated with a first cell" comprises: a PCI of the first cell is used for generating a PSS and an SSS of all SSB resources respectively indicated by the plurality of SSB resource configurations.

As one embodiment, the meaning of the sentence "the plurality of SSB resource configurations are all associated with a first cell" comprises: a PCI of the first cell is used for generating a PSS and an SSS of all SSB resources indicated by each SSB resource configuration amongst the plurality of SSB resource configurations.

As one embodiment, the meaning of the sentence "the plurality of SSB resource configurations are all associated with a first cell" comprises: a PCI of the first cell is used for generating a PSS and an SSS of each SSB resource indicated by each SSB resource configuration amongst the plurality of SSB resource configurations.

As one embodiment, the meaning of the sentence "the plurality of SSB resource configurations are all associated with a first cell" comprises: all SSB resources indicated by the plurality of SSB resource configurations are all used for synchronization of the first cell.

As one embodiment, the meaning of the sentence "the plurality of SSB resource configurations are all associated with a first cell" comprises: all SSB resources indicated by any SSB resource configuration amongst the plurality of SSB resource configurations are all used for synchronization of the first cell.

As one embodiment, the meaning of the sentence "the plurality of SSB resource configurations are all associated with a first cell" comprises: all SSB resources indicated by each SSB resource configuration amongst the plurality of SSB resource configurations are all used for synchronization of the first cell.

As one embodiment, the meaning of the sentence "the plurality of SSB resource configurations are all associated with a first cell" comprises: each SSB resource indicated by each SSB resource configuration amongst the plurality of SSB resource configurations is used for synchronization of the first cell.

## Embodiment 9

Embodiment 9 illustrates a schematic diagram of a plurality of SSB resource configurations and a second cell according to one embodiment of the present application, as shown in FIG. 9.

In Embodiment 9, the first cell is an SCell, and an SSB resource indicated by at least one SSB resource configuration amongst the plurality of SSB resource configurations is on a second cell; and the second cell is a PCell, or the second cell is one SCell other than the first cell.

As one embodiment, the first cell is an SSB-less SCell.

As one embodiment, the first cell is an SCell, and an SSB resource indicated by at least one SSB resource configuration amongst the plurality of SSB resource configurations is on the second cell; and the second cell is a PCell, or the second cell is one SCell other than the first cell.

As one embodiment, the first cell is an SSB-less SCell, and an SSB resource indicated by at least one SSB resource configuration amongst the plurality of SSB resource configurations is on the second cell; and the second cell is a PCell, or the second cell is one SCell other than the first cell.

As one embodiment, the first cell is an SSB-less SCell, and an SSB resources indicated by all SSB resource configurations amongst the plurality of SSB resource configurations is on the second cell.

As one embodiment, the first cell is an SSB-less SCell, and all SSB resources indicated by all SSB resource configurations amongst the plurality of SSB resource configurations are on the second cell.

As one embodiment, the first cell is an SSB-less SCell, and all SSB resources indicated by each SSB resource configuration amongst the plurality of SSB resource configurations are on the second cell.

As one embodiment, the first cell and the second cell belong to the same cell group.

As one embodiment, the first cell and the second cell belong to the same PCG.

As one embodiment, the first cell and the second cell belong to the same PCG, the first cell is an SCell, and the second cell is a PCell.

As one embodiment, the first cell and the second cell belong to the same PCG, the first cell is an SCell, and the second cell is one SCell other than the first cell.

As one embodiment, the first cell and the second cell belong to the same SCG.

As one embodiment, the first cell and the second cell belong to the same SCG, the first cell is an SCell, and the second cell is a PSCell.

As one embodiment, the first cell and the second cell belong to the same SCG, the first cell is an SCell, and the second cell is one SCell other than the first cell.

As one embodiment, at least one of SSB resources indicated by at least one SSB resource configuration amongst the plurality of SSB resource configurations is used for synchronization of the first cell.

As one embodiment, the first cell is an SSB-less SCell, and at least one of SSB resources indicated by at least one SSB resource configuration amongst the plurality of SSB resource configurations on the second cell is used for synchronization of the first cell.

**Embodiment 10**

Embodiment 10 illustrates a schematic diagram of a plurality of SSB resource configurations and a second cell according to another embodiment of the present application, as shown in FIG. 10.

In Embodiment 10, the first cell is an SCell, an SSB resource indicated by the first SSB resource configuration is on the first cell, and an SSB resource indicated by at least one SSB resource configuration amongst the plurality of SSB resource configurations is on the second cell; and the second cell is a PCell, or the second cell is one SCell other than the first cell.

As one embodiment, the first cell is an SCell, an SSB resource indicated by the first SSB resource configuration is on the first cell, and an SSB resource indicated by at least one SSB resource configuration amongst the plurality of SSB resource configurations is on the second cell; and the second cell is a PCell, or the second cell is one SCell other than the first cell.

As one embodiment, the first SSB resource configuration is one of the plurality of SSB resource configurations.

As one embodiment, the first SSB resource configuration is not configured to the second cell.

As one embodiment, an SSB resource indicated by the first SSB resource configuration is not on the second cell.

As one embodiment, an SSB resource indicated by the first SSB resource configuration is not transmitted on the second cell.

As one embodiment, an SSB resource indicated by the first SSB resource configuration is transmitted on the first cell.

As one embodiment, an SSB resource indicated by the first SSB resource configuration is only transmitted on the first cell.

As one embodiment, at least one of SSB resources indicated by at least one SSB resource configuration amongst the plurality of SSB resource configurations is used for synchronization of the first cell.

As one embodiment, when the second cell is deactivated, an SSB resource indicated by the first SSB resource configuration is transmitted on the first cell.

As one embodiment, when the second cell is not deactivated, an SSB resource indicated by the first SSB resource configuration is not transmitted on the first cell.

As one embodiment, when the second cell is not deactivated, an SSB resource indicated by the first SSB resource configuration is transmitted on the first cell.

**Embodiment 11**

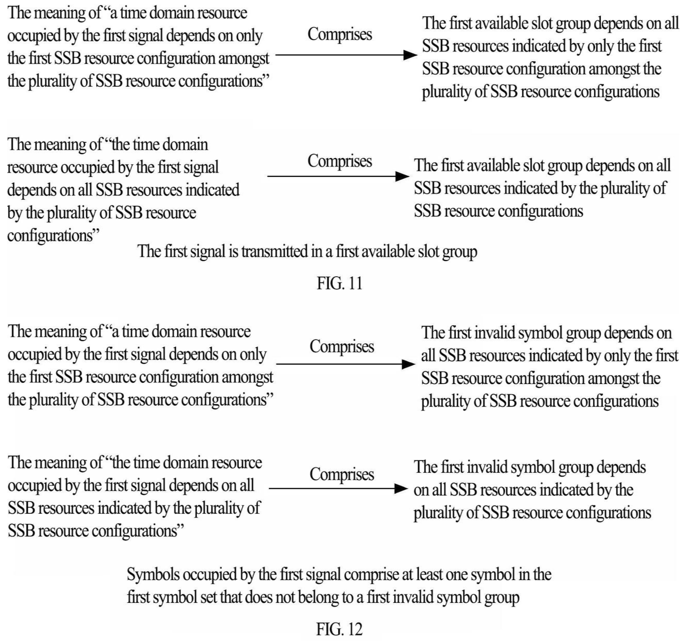

Embodiment 11 illustrates a schematic diagram of a first available slot group according to one embodiment of the present application, as shown in FIG. 11.

In Embodiment 11, the first signal is transmitted in the first available slot group, and the first available slot group comprises at least one available slot; the meaning of "a time domain resource occupied by the first signal depends on only the first SSB resource configuration amongst the plurality of SSB resource configurations" comprises: the first available slot group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first available slot group depends on all SSB resources indicated by the plurality of SSB resource configurations.

As one embodiment, when AvailableSlotCounting is enabled, the first signal is transmitted in the first available slot group, the first available slot group comprises at least one available slot, and the first available slot group depends on all SSB resources indicated by only the first SSB resource configuration amongst the plurality of SSB resource configurations.

As one embodiment, when AvailableSlotCounting is enabled, the first signal is a PUSCH transmission of PUSCH repetition type A, the first signal is transmitted in the first available slot group, the first available slot group comprises at least one available slot, and the first available slot group depends on all SSB resources indicated by only the first SSB resource configuration amongst the plurality of SSB resource configurations.

As one embodiment, when AvailableSlotCounting is enabled, the first signal is a PUSCH transmission of PUSCH repetition type A, the first signaling is a DCI signaling, a format of the first signaling is DCI format 0_1 or DCI format 0_2, the first signal is transmitted in the first available slot group, the first available slot group comprises at least one available slot, and the first available slot group depends on all SSB resources indicated by only the first SSB resource configuration amongst the plurality of SSB resource configurations.

As one embodiment, when AvailableSlotCounting is enabled, the first signal is a PUSCH transmission of PUSCH repetition type A, the number of repetitions of the first signal is greater than 1, the first signaling is a DCI signaling, a format of the first signaling is DCI format 0_1 or DCI format 0_2, the first signal is transmitted in the first available slot group, the first available slot group comprises at least one available slot, and the first available slot group depends on all SSB resources indicated by only the first SSB resource configuration amongst the plurality of SSB resource configurations.

As one embodiment, the first signal is a PUSCH transmission of TB processing over multiple slots, the first signal is transmitted in the first available slot group, the first available slot group comprises at least one available slot, and the first available slot group depends on all SSB resources indicated by only the first SSB resource configuration amongst the plurality of SSB resource configurations.

As one embodiment, the first signal is a PUSCH transmission of TB processing over multiple slots, the first signaling is a DCI signaling, a format of the first signaling is DCI format 0_1 or DCI format 0_2, the first signal is transmitted in the first available slot group, the first available slot group comprises at least one available slot, and the first available slot group depends on all SSB resources indicated by only the first SSB resource configuration amongst the plurality of SSB resource configurations.

As one embodiment, the first signal is a PUSCH transmission of PUSCH repetition type A, the first signaling is an RAR uplink grant signaling, the first signal is transmitted in the first available slot group, the first available slot group comprises at least one available slot, and the first available slot group depends on all SSB resources indicated by only the first SSB resource configuration amongst the plurality of SSB resource configurations.

As one embodiment, the first signal is a PUSCH transmission of PUSCH repetition type A, the first signaling is a DCI signaling, a format of the first signaling is DCI format 0_0 scrambled by a TC-RNTI, the first signal is transmitted in the first available slot group, the first available slot group comprises at least one available slot, and the first available slot group depends on all SSB resources indicated by only the first SSB resource configuration amongst the plurality of SSB resource configurations.

As one embodiment, the first signaling is used for indicating a first symbol set.

As one embodiment, the first signaling comprises a TDRA information field.

As one embodiment, the first signaling is a DCI signaling, a format of the first signaling is DCI format 0_1 or DCI format 0_2, and a TDRA information field of the first signaling indicates the first symbol set.

As one embodiment, the first signaling is an RAR uplink grant signaling, and a TDRA information field in the first signaling indicates the first symbol set.

As one embodiment, the first signaling is a DCI signaling, a format of the first signaling is DCI format 0_0 scrambled by a TC-RNTI, and a TDRA information field of the first signaling indicates the first symbol set.

As one embodiment, a time domain resource occupied by the first signal comprises the first symbol set.

As one embodiment, a time domain resource occupied by the first signal is the first symbol set.

As one embodiment, the first symbol set belongs to the first available slot group.

As one embodiment, the first symbol set only belongs to the first available slot group.

As one embodiment, the first available slot group comprises $N \cdot K$ available slots.

As one embodiment, the first available slot group is composed of $N \cdot K$ available slots.

As one embodiment, the $N$ is a positive integer.

As one embodiment, the $N$ is greater than 1.

As one embodiment, the $N$ is equal to 1.

As one embodiment, the $N$ is default.

As one embodiment, the $N$ is configured by numberOfSlotsTBoMS.

As one embodiment, the $K$ is a positive integer.

As one embodiment, the $K$ is greater than 1.

As one embodiment, the $K$ is equal to 1.

As one embodiment, the $K$ is default.

As one embodiment, the $K$ is configured by numberOfRepetitions.

As one embodiment, the $K$ is configured by pusch-AggregationFactor.

As one embodiment, the $K$ indicates the number of repetitions.

As one embodiment, any available slot in the first available slot group comprises at least one symbol belonging to the first symbol set.

As one embodiment, each available slot in the first available slot group comprises at least one symbol belonging to the first symbol set.

As one embodiment, the quantity of symbols belonging to the first symbol set comprised in any available slot in the first available slot group does not exceed 14.

As one embodiment, the number of symbols belonging to the first symbol set comprised in each available slot in the first available slot group does not exceed 14.

As one embodiment, the number of symbols belonging to the first symbol set comprised in each available slot in the first available slot group is the same.

As one embodiment, symbols belonging to the first symbol set comprised in each available slot in the first available slot group have the same distribution in each available slot.

As one embodiment, the number of symbols belonging to the first symbol set comprised in each available slot in the first available slot group is the same, and the symbols have the same distribution in each available slot.

As one embodiment, the first available slot group is continuously distributed in the time domain.

As one embodiment, the first available slot group is not continuously distributed in the time domain.

As one embodiment, the meaning of "the first available slot group depends on all SSB resources indicated by only the first SSB resource configuration amongst the plurality of SSB resource configurations" comprises: all or partial available slots in the first available slot group depend on all SSB resources indicated by only the first SSB resource configuration amongst the plurality of SSB resource configurations.

As one embodiment, the meaning of "the first available slot group depends on all SSB resources indicated by only the first SSB resource configuration amongst the plurality of SSB resource configurations" comprises: each available slot in the first available slot group depends on all SSB resources indicated by only the first SSB resource configuration amongst the plurality of SSB resource configurations.

As one embodiment, the meaning of "the first available slot group depends on all SSB resources indicated by only the first SSB resource configuration amongst the plurality of SSB resource configurations" comprises: the first symbol set depends on all SSB resources indicated by only the first SSB resource configuration amongst the plurality of SSB resource configurations.

As one embodiment, the meaning of "the first available slot group depends on all SSB resources indicated by only the first SSB resource configuration amongst the plurality of SSB resource configurations" comprises: any symbol in the first symbol set is different from symbols occupied by all SSB resources indicated by only the first SSB resource configuration amongst the plurality of SSB resource configurations.

As one embodiment, the meaning of "the first available slot group depends on all SSB resources indicated by only the first SSB resource configuration amongst the plurality of SSB resource configurations" comprises: any symbol in the first symbol set does not overlap with symbols occupied by all SSB resources indicated by only the first SSB resource configuration amongst the plurality of SSB resource configurations.

As one embodiment, the meaning of "the first available slot group depends on all SSB resources indicated by only the first SSB resource configuration amongst the plurality of SSB resource configurations" comprises: any symbol in the first symbol set is orthogonal to symbols occupied by all SSB resources indicated by only the first SSB resource configuration amongst the plurality of SSB resource configurations.

As one embodiment, the meaning of "the first available slot group depends on all SSB resources indicated by only the first SSB resource configuration amongst the plurality of SSB resource configurations" comprises: a symbol belonging to the first symbol set comprised in each available slot in the first available slot group is different from symbols occupied by all SSB resource indicated by only the first SSB resource configuration amongst the plurality of SSB resource configurations.

As one embodiment, the meaning of "the first available slot group depends on all SSB resources indicated by only the first SSB resource configuration amongst the plurality of SSB resource configurations" comprises: a symbol belonging to the first symbol set comprised in each available slot in the first available slot group does not overlap with symbols occupied by all SSB resources indicated by only the first SSB resource configuration amongst the plurality of SSB resource configurations.

As one embodiment, the meaning of "the first available slot group depends on all SSB resources indicated by only the first SSB resource configuration amongst the plurality of SSB resource configurations" comprises: a symbol belonging to the first symbol set comprised in each available slot in the first available slot group is orthogonal to symbols occupied by all SSB resources indicated by only the first SSB resource configuration amongst the plurality of SSB resource configurations.

As one embodiment, when AvailableSlotCounting is enabled, the first signal is transmitted in the first available slot group, the first available slot group comprises at least one available slot, and the first available slot group depends on all SSB resources indicated by the plurality of SSB resource configurations.

As one embodiment, when AvailableSlotCounting is enabled, the first signal is a PUSCH transmission of PUSCH repetition type A, the first signal is transmitted in the first available slot group, the first available slot group comprises at least one available slot, and the first avail-

59    **EP 4 679 912 A1**    60

able slot group depends on all SSB resources indicated by the plurality of SSB resource configurations.

As one embodiment, when AvailableSlotCounting is enabled, the first signal is a PUSCH transmission of PUSCH repetition type A, the first signaling is a DCI signaling, a format of the first signaling is DCI format 0_1 or DCI format 0_2, the first signal is transmitted in the first available slot group, the first available slot group comprises at least one available slot, and the first available slot group depends on all SSB resources indicated by the plurality of SSB resource configurations.

As one embodiment, when AvailableSlotCounting is enabled, the first signal is a PUSCH transmission of PUSCH repetition type A, the number of repetitions of the first signal is greater than 1, the first signaling is a DCI signaling, a format of the first signaling is DCI format 0_1 or DCI format 0_2, the first signal is transmitted in the first available slot group, the first available slot group comprises at least one available slot, and the first available slot group depends on all SSB resources indicated by the plurality of SSB resource configurations.

As one embodiment, the first signal is a PUSCH transmission of TB processing over multiple slots, the first signal is transmitted in the first available slot group, the first available slot group comprises at least one available slot, and the first available slot group depends on all SSB resources indicated by the plurality of SSB resource configurations.

As one embodiment, the first signal is a PUSCH transmission of TB processing over multiple slots, the first signaling is a DCI signaling, a format of the first signaling is DCI format 0_1 or DCI format 0_2, the first signal is transmitted in the first available slot group, the first available slot group comprises at least one available slot, and the first available slot group depends on all SSB resources indicated by the plurality of SSB resource configurations.

As one embodiment, the first signal is a PUSCH transmission of PUSCH repetition type A, the first signaling is an RAR uplink grant signaling, the first signal is transmitted in the first available slot group, the first available slot group comprises at least one available slot, and the first available slot group depends on all SSB resources indicated by the plurality of SSB resource configurations.

As one embodiment, the first signal is a PUSCH transmission of PUSCH repetition type A, the first signaling is a DCI signaling, a format of the first signaling is DCI format 0_0 scrambled by a TC-RNTI, the first signal is transmitted in the first available slot group, the first available slot group comprises at least one available slot, and the first available slot group depends on all SSB resources indicated by the plurality of SSB resource configurations.

As one embodiment, the meaning of "the first available slot group depends on all SSB resources indicated by the plurality of SSB resource configurations" comprises: all or partial available slots in the first available slot group depend on all SSB resources indicated by the plurality of SSB resource configurations.

As one embodiment, the meaning of "the first available slot group depends on all SSB resources indicated by the plurality of SSB resource configurations" comprises: each available slot in the first available slot group depends on all SSB resources indicated by the plurality of SSB resource configurations.

As one embodiment, the meaning of "the first available slot group depends on all SSB resources indicated by the plurality of SSB resource configurations" comprises: the first symbol set depends on all SSB resources indicated by the plurality of SSB resource configurations.

As one embodiment, the meaning of "the first available slot group depends on all SSB resources indicated by the plurality of SSB resource configurations" comprises: any symbol in the first symbol set is different from symbols occupied by all SSB resources indicated by the plurality of SSB resource configurations.

As one embodiment, the meaning of "the first available slot group depends on all SSB resources indicated by the plurality of SSB resource configurations" comprises: any symbol in the first symbol set does not overlap with symbols occupied by all SSB resources indicated by the plurality of SSB resource configurations.

As one embodiment, the meaning of "the first available slot group depends on all SSB resources indicated by the plurality of SSB resource configurations" comprises: any symbol in the first symbol set is orthogonal to symbols occupied by all SSB resources indicated by the plurality of SSB resource configurations.

As one embodiment, the meaning of "the first available slot group depends on all SSB resources indicated by the plurality of SSB resource configurations" comprises: a symbol belonging to the first symbol set comprised in each available slot in the first available slot group is different from symbols occupied by all SSB resources indicated by the plurality of SSB resource configurations.

As one embodiment, the meaning of "the first available slot group depends on all SSB resources indicated by the plurality of SSB resource configurations" comprises: a symbol belonging to the first symbol set comprised in each available slot in the first available slot group does not overlap with symbols occupied by all SSB resources indicated by the plurality of SSB resource configurations.

As one embodiment, the meaning of "the first available slot group depends on all SSB resources indicated by the plurality of SSB resource configurations" comprises: a symbol belonging to the first symbol set comprised in each available slot in the first available slot group is orthogonal to symbols occupied by all SSB resources indicated by the plurality of SSB resource configurations.

31

**Embodiment 12**

Embodiment 12 illustrates a schematic diagram of a first invalid symbol group according to one embodiment of the present application, as shown in FIG. 12.

In Embodiment 12, the first signaling is used for indicating a first symbol set, a symbol occupied by the first signal comprises at least one symbol in a first symbol set that does not belong to the first invalid symbol group, and the first invalid symbol group comprises at least one invalid symbol; the meaning of "a time domain resource occupied by the first signal depends on only the first SSB resource configuration amongst the plurality of SSB resource configurations" comprises: the first invalid symbol group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first invalid symbol group depends on all SSB resources indicated by the plurality of SSB resource configurations.

As one embodiment, the first signaling comprises a TDRA (Time Domain Resource Assignment) field, and the TDRA field comprised in the first signaling is used for indicating the first symbol set.

As one embodiment, for the specific definition of the TDRA field, refer to Chapter 7.3.1 of 3GPP TS 38.212.

As one embodiment, the first signal is a transmission of PUSCH repetition type B, the first signaling is used for indicating a first symbol set, symbols occupied by the first signal comprise at least one symbol in the first symbol set that does not belong to a first invalid symbol group, and the first invalid symbol group comprises at least one invalid symbol.

As one embodiment, for the specific definition of PUSCH repetition type B, refer to Chapter 6 of 3GPP TS 38.214.

As one embodiment, the first symbol set is composed of symbols comprised in one nominal repetition.

As one embodiment, the first symbol set is composed of symbols comprised in one or more nominal repetitions.

As one embodiment, the nominal repetition is for PUSCH repetition type B.

As one embodiment, for the specific definition of the nominal repetition, refer to Chapter 6.1 of 3GPP TS38.214.

As one embodiment, the meaning of "the first invalid symbol group depends on all SSB resources indicated by only the first SSB resource configuration amongst the plurality of SSB resource configurations" comprises: the first invalid symbol group comprises all symbols occupied by all SSB resources indicated by only the first SSB resource configuration amongst the plurality of SSB resource configurations.

As one embodiment, the meaning of "the first invalid symbol group depends on all SSB resources indicated by only the first SSB resource configuration amongst the plurality of SSB resource configurations" comprises: the first invalid symbol group comprises one or more symbols occupied by all SSB resources indicated by only the first SSB resource configuration amongst the plurality of SSB resource configurations.

As one embodiment, the meaning of "the first invalid symbol group depends on all SSB resources indicated by only the first SSB resource configuration amongst the plurality of SSB resource configurations" comprises: the first invalid symbol group comprises partial or all symbols occupied by all SSB resources indicated by only the first SSB resource configuration amongst the plurality of SSB resource configurations.

As one embodiment, the meaning of "the first invalid symbol group depends on all SSB resources indicated by the plurality of SSB resource configurations" comprises: the first invalid symbol group comprises all symbols occupied by all SSB resources indicated by the plurality of SSB resource configurations.

As one embodiment, the meaning of "the first invalid symbol group depends on all SSB resources indicated by the plurality of SSB resource configurations" comprises: the first invalid symbol group comprises one or more symbols occupied by all SSB resources indicated by the plurality of SSB resource configurations.

As one embodiment, the meaning of "the first invalid symbol group depends on all SSB resources indicated by the plurality of SSB resource configurations" comprises: the first invalid symbol group comprises partial or all symbols occupied by all SSB resources indicated by the plurality of SSB resource configurations.

As one embodiment, the first invalid symbol group further comprises all symbols indicated as a downlink by an RRC parameter.

As one embodiment, the first invalid symbol group further comprises one or more symbols indicated as a downlink by an RRC parameter.

As one embodiment, the first invalid symbol group further comprises partial or all symbols indicated as a downlink by an RRC parameter.

As one embodiment, the first invalid symbol group further comprises all symbols indicated as a downlink by tdd-UL-DL-ConfigurationCommon or tdd-UL-DL-ConfigurationDedicated.

As one embodiment, the first invalid symbol group further comprises one or more symbols indicated as a downlink by tdd-UL-DL-ConfigurationCommon or tdd-UL-DL-ConfigurationDedicated.

As one embodiment, the first invalid symbol group further comprises partial or all symbols indicated as a downlink by tdd-UL-DL-ConfigurationCommon or tdd-UL-DL-ConfigurationDedicated.

As one embodiment, the first invalid symbol group further comprises all symbols indicated to be used for SS/PBCH block reception.

As one embodiment, the first invalid symbol group further comprises one or more symbols indicated to be used for SS/PBCH block reception.

As one embodiment, the first invalid symbol group further comprises partial or all symbols indicated to be used for SS/PBCH block reception.

As one embodiment, the first invalid symbol group further comprises all symbols indicated by ssb-PositionsInBurst to be used for SS/PBCH block reception.

As one embodiment, the first invalid symbol group further comprises one or more symbols indicated by ssb-PositionsInBurst to be used for SS/PBCH block reception.

As one embodiment, the first invalid symbol group further comprises partial or all symbols indicated by ssb-PositionsInBurst to be used for SS/PBCH block reception.

As one sub-embodiment of the above embodiment, the SS/PBCH block belongs to a serving cell where the first signaling is located.

As one sub-embodiment of the above embodiment, the SS/PBCH block belongs to a serving cell where the first signal is located.

As one sub-embodiment of the above embodiment, the SS/PBCH block belongs to one serving cell other than a serving cell where the first signal is located.

As one sub-embodiment of the above embodiment, the SS/PBCH block belongs to a BWP (Bandwidth Part) where the first signaling is located.

As one embodiment, the first invalid symbol group further comprises all symbols of one CORESET (Control Resource Set) indicated to be used for a Type0-PDCCH CSS (Common Search Space) set.

As one embodiment, the first invalid symbol group further comprises one or more symbols of one CORESET (Control resource set) indicated to be used for a Type0-PDCCH CSS (Common Search Space) set.

As one embodiment, the first invalid symbol group further comprises partial or all symbols of one CORESET (Control Resource Set) indicated to be used for a Type0-PDCCH CSS (Common Search Space) set.

As one embodiment, the first invalid symbol group further comprises all symbols of one CORESET (Control Resource Set) indicated by pdcch-ConfigSIB 1 to be used for a Type0-PDCCH CSS (Common Search Space) set.

As one embodiment, the first invalid symbol group further comprises one or more symbols of one CORESET (Control Resource Set) indicated by pdcch-ConfigSIB1 to be used for a Type0-PDCCH CSS (Common Search Space) set.

As one embodiment, the first invalid symbol group further comprises partial or all symbols of one CORESET (Control Resource Set) indicated by pdcch-ConfigSIB1 to be used for a Type0-PDCCH CSS (Common Search Space) set.

As one embodiment, the first invalid symbol group further comprises all symbols indicated by number-OfInvalidSymbolsForDL-UL-Switching.

As one embodiment, the first invalid symbol group further comprises one or more symbols indicated by numberOfInvalidSymbolsForDL-UL-Switching.

As one embodiment, the first invalid symbol group further comprises partial or all symbols indicated by numberOfInvalidSymbolsForDL-UL-Switching.

As one embodiment, the first invalid symbol group further comprises all symbols indicated as invalid symbols by an RRC parameter.

As one embodiment, the first invalid symbol group further comprises one or more symbols indicated as invalid symbols by an RRC parameter.

As one embodiment, the first invalid symbol group further comprises partial or all symbols indicated as invalid symbols by an RRC parameter.

As one embodiment, the first invalid symbol group further comprises all symbols indicated as invalid symbols by invalidSymbolPattern.

As one embodiment, the first invalid symbol group further comprises one or more symbols indicated as invalid symbols by invalidSymbolPattern.

As one embodiment, the first invalid symbol group further comprises partial or all symbols indicated as invalid symbols by invalidSymbolPattern.

As one embodiment, a symbol occupied by the first signal comprises all symbols comprised in one or more nominal repetitions that do not belong to the first invalid symbol group.

As one embodiment, a symbol occupied by the first signal comprises partial or all symbols comprised in one or more nominal repetitions that do not belong to the first invalid symbol group.

As one embodiment, the first invalid symbol group is for the first signal.

As one embodiment, the first invalid symbol group is for PUSCH repetition type B.

**Embodiment 13**

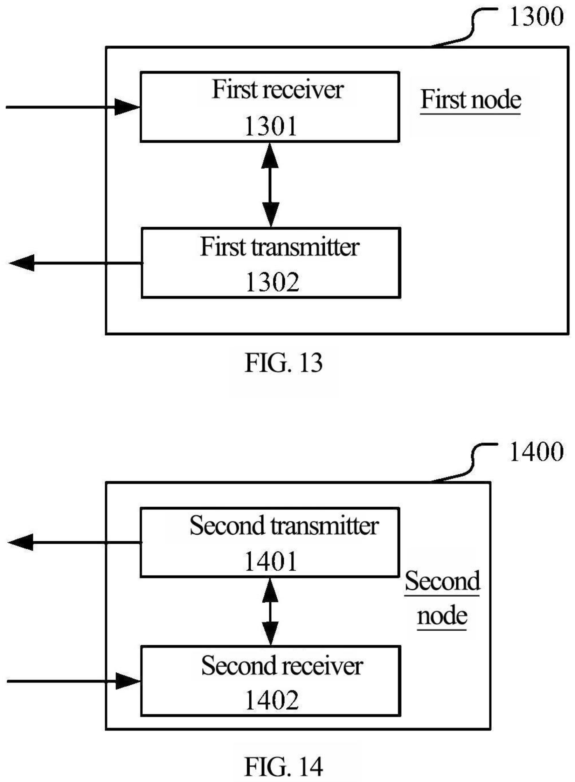

Embodiment 13 illustrates a structural block diagram of a processing device used in a first node device according to one embodiment of the present application, as shown in FIG. 13. In FIG. 13, the processing device 1300 in the first node device comprises a first receiver 1301 and a first transmitter 1302.

As one embodiment, the first node device is user equipment.

As one embodiment, the first node device is a relay node device.

As one embodiment, the first receiver 1301 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1302 comprises at least one of {an antenna 452, a transmitting device 454, a transmitting processor 468, a multi-antenna transmitting processor 457, a controller/processor 459, a memory 460, and a data source 467} in Embodiment 4.

The first receiver 1301 receives a plurality of SSB resource configurations, any SSB resource configuration amongst the plurality of SSB resource configurations being used for indicating at least one SSB resource, and the plurality of SSB resource configurations being all associated with a first cell; receives a first information block, the first information block being used for determining a first SSB resource configuration, and the first SSB resource configuration being one of the plurality of SSB resource configurations; in response to receiving the first information block, determines an SSB transmission according to only the first SSB resource configuration amongst the plurality of SSB resource configurations; and receives a first signaling on the first cell, the first signaling being used for scheduling a first signal.

The first transmitter 1302 sends the first signal on the first cell.

In Embodiment 13, a time domain resource occupied by the first signal depends on only the first SSB resource configuration amongst the plurality of SSB resource configurations, or the time domain resource occupied by the first signal depends on all SSB resources indicated by the plurality of SSB resource configurations.

As one embodiment, the first receiver 1301 receives a second signaling, the second signaling being used for scheduling a second signal; abandons sending the second signal on a target time domain resource when a first condition is met; and sends the second signal on the target time domain resource when the first condition is not met, wherein the time domain resource occupied by the first signal depends on only the first SSB resource configuration amongst the plurality of SSB resource configurations; the target time domain resource depends on one SSB resource configuration other than the first SSB resource configuration amongst the plurality of SSB resource configurations; and the first condition comprises: the target time domain resource overlaps with an SSB resource determined by the first SSB resource configuration in a time domain.

As one embodiment, the first condition further comprises that the second signaling is received no later than a first symbol, and the first symbol depends on a symbol occupied by the first information block.

As one embodiment, the first condition further comprises that the target time domain resource is not earlier than a first symbol, and the first symbol depends on a symbol occupied by the first information block.

As one embodiment, the meaning of the sentence "the plurality of SSB resource configurations are all associated with a first cell" comprises: all SSB resources respectively indicated by the plurality of SSB resource configurations are all on the first cell.

As one embodiment, the first cell is an SCell, and an SSB resource indicated by at least one SSB resource configuration amongst the plurality of SSB resource configurations is on the second cell; and the second cell is a PCell, or the second cell is one SCell other than the first cell.

As one embodiment, the first cell is an SCell, an SSB resource indicated by the first SSB resource configuration is on the first cell, and an SSB resource indicated by at least one SSB resource configuration amongst the plurality of SSB resource configurations is on the second cell; and the second cell is a PCell, or the second cell is one SCell other than the first cell.

As one embodiment, the first signal is transmitted in a first available slot group, and the first available slot group comprises at least one available slot; the meaning of "a time domain resource occupied by the first signal depends on only the first SSB resource configuration amongst the plurality of SSB resource configurations" comprises: the first available slot group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first available slot group depends on all SSB resources indicated by the plurality of SSB resource configurations.

As one embodiment, the first signaling is used for indicating a first symbol set, a symbol occupied by the first signal comprises at least one symbol in a first symbol set that does not belong to a first invalid symbol group, and the first invalid symbol group comprises at least one invalid symbol; the meaning of "a time domain resource occupied by the first signal depends on only the first SSB resource configuration amongst the plurality of SSB resource configurations" comprises: the first invalid symbol group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first invalid symbol group depends on all SSB resources indicated by the plurality of SSB resource configurations.

**Embodiment 14**

Embodiment 14 illustrates a structural block diagram of a processing device used in a second node device according to one embodiment of the present application, as shown in FIG. 14. In FIG. 14, the processing device 1400 in the second node device comprises a second transmitter 1401 and a second receiver 1402.

As one embodiment, the second node device is a base station device.

As one embodiment, the second node device is user equipment.

As one embodiment, the second node device is a relay node device.

As one embodiment, the second transmitter 1401 comprises at least one of {an antenna 420, a transmitting device 418, a transmitting processor 416, a multi-antenna transmitting processor 471, a controller/-processor 475, and a memory 476} in Embodiment 4.

As one embodiment, the second receiver 1402 comprises at least one of {an antenna 420, a receiving device 418, a receiving processor 470, a multi-antenna receiving processor 472, a controller/processor 475, and a memory 476} in Embodiment 4.

The second transmitter 1401 sends a plurality of SSB resource configurations, any SSB resource configuration amongst the plurality of SSB resource configurations being used for indicating at least one SSB resource, and the plurality of SSB resource configurations being all associated with a first cell; sends a first information block, the first information block being used for determining a first SSB resource configuration, and the first SSB resource configuration being one of the plurality of SSB resource configurations; and sends a first signaling on the first cell, the first signaling being used for scheduling a first signal.

The second receiver 1402 receives the first signal on the first cell.

In Embodiment 14, in response to receiving the first information block, a recipient of the first information block determines an SSB transmission according to only the first SSB resource configuration amongst the plurality of SSB resource configurations; and a time domain resource occupied by the first signal depends on only the first SSB resource configuration amongst the plurality of SSB resource configurations, or the time domain resource occupied by the first signal depends on all SSB resources indicated by the plurality of SSB resource configurations.

As one embodiment, the second transmitter sends a second signaling, the second signaling being used for scheduling a second signal; abandons receiving the second signal on a target time domain resource when a first condition is met; and receives the second signal on the target time domain resource when the first condition is not met, wherein the time domain resource occupied by the first signal depends on only the first SSB resource configuration amongst the plurality of SSB resource configurations; the target time domain resource depends on one SSB resource configuration other than the first SSB resource configuration amongst the plurality of SSB resource configurations; and the first condition comprises: the target time domain resource overlaps with an SSB resource determined by the first SSB resource configuration in a time domain.

As one embodiment, the first condition further comprises that the second signaling is received no later than a first symbol, and the first symbol depends on a symbol occupied by the first information block.

As one embodiment, the first condition further comprises that the target time domain resource is not earlier than a first symbol, and the first symbol depends on a symbol occupied by the first information block.

As one embodiment, the meaning of the sentence "the plurality of SSB resource configurations are all associated with a first cell" comprises: all SSB resources respectively indicated by the plurality of SSB resource configurations are all on the first cell.

As one embodiment, the first cell is an SCell, and an SSB resource indicated by at least one SSB resource configuration amongst the plurality of SSB resource configurations is on the second cell; and the second cell is a PCell, or the second cell is one SCell other than the first cell.

As one embodiment, the first cell is an SCell, an SSB resource indicated by the first SSB resource configuration is on the first cell, and an SSB resource indicated by at least one SSB resource configuration amongst the plurality of SSB resource configurations is on the second cell; and the second cell is a PCell, or the second cell is one SCell other than the first cell.

As one embodiment, the first signal is transmitted in a first available slot group, and the first available slot group comprises at least one available slot; the meaning of "a time domain resource occupied by the first signal depends on only the first SSB resource configuration amongst the plurality of SSB resource configurations" comprises: the first available slot group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first available slot group depends on all SSB resources indicated by the plurality of SSB resource configurations.

As one embodiment, the first signaling is used for indicating a first symbol set, a symbol occupied by the first signal comprises at least one symbol in a first symbol set that does not belong to a first invalid symbol group, and the first invalid symbol group comprises at least one invalid symbol; the meaning of "a time domain resource occupied by the first signal depends on only the first SSB resource configuration amongst the plurality of SSB resource configurations" comprises: the first invalid symbol group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first invalid symbol group depends on all SSB resources indicated by the plurality of SSB resource configurations.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include but are not limited to drones, communication modules on the drones, remote-controlled airplanes, aircrafts, small airplanes, mobile phones, tablet computers, laptops, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base stations or the system devices in the present application include but are not limited to a macrocellular base station, a microcellular base station, a Femtocell, a relay base station, a gNB (NR node B) NR node B, a TRP (Transmitter Receiver Point), and other wireless communication devices.

The above is only preferred embodiments of the present application and is not used for limiting the protection scope of the present application. Any change and modification made based on the embodiments described in the specification, if similar partial or complete technical effects can be obtained, should be deemed obvious and fall within the protection scope of the present invention.

## Claims

1. A first node device for wireless communication, comprising:

   a first receiver receiving a plurality of SSB resource configurations, any SSB resource configuration amongst the plurality of SSB resource configurations being used for indicating at least one SSB resource, and the plurality of SSB resource configurations being all associated with a first cell;
   receiving a first information block, the first information block being used for determining a first SSB resource configuration, and the first SSB resource configuration being one of the plurality of SSB resource configurations;
   in response to receiving the first information block, determining an SSB transmission according to only the first SSB resource configuration amongst the plurality of SSB resource configurations; and
   receiving a first signaling on the first cell, the first signaling being used for scheduling a first signal; and

   a first transmitter sending the first signal on the first cell,
   wherein a time domain resource occupied by the first signal depends on only the first SSB resource configuration amongst the plurality of SSB resource configurations, or the time domain resource occupied by the first signal depends on all SSB resources indicated by the plurality of SSB resource configurations.

2. The first node device according to claim 1, comprising:

   the first receiver receiving a second signaling, the second signaling being used for scheduling a second signal;
   abandoning sending the second signal on a target time domain resource when a first condition is met; and sending the second signal on the target time domain resource when the first condition is not met,
   wherein the time domain resource occupied by the first signal depends on only the first SSB resource configuration amongst the plurality of SSB resource configurations; the target time domain resource depends on one SSB resource configuration other than the first SSB resource configuration amongst the plurality of SSB resource configurations; and the first condition comprises: the target time domain resource overlaps with an SSB resource determined by the first SSB resource configuration in a time domain.

3. The first node device according to claim 2, wherein the first condition further comprises that the second signaling is received no later than a first symbol, or the first condition further comprises that the target time domain resource is not earlier than a first symbol; and the first symbol depends on a symbol occupied by the first information block.

4. The first node device according to any one of claims 1 to 3, wherein the plurality of SSB resource configurations being all associated with a first cell comprises: all SSB resources respectively indicated by the plurality of SSB resource configurations are all on the first cell.

5. The first node device according to any one of claims 1 to 4, wherein the first cell is an SCell, and an SSB resource indicated by at least one SSB resource configuration amongst the plurality of SSB resource configurations is on a second cell; and the second cell is a PCell, or the second cell is one SCell other than the first cell;
   or the first cell is an SCell, an SSB resource indicated by the first SSB resource configuration is on the first cell, and an SSB resource indicated by at least one SSB resource configuration amongst the plurality of SSB resource configurations is on a second cell; and the second cell is a PCell, or the second cell is one SCell other than the first cell.

6. The first node device according to any one of claims 1 to 5, wherein the first signal is transmitted in a first available slot group, and the first available slot group comprises at least one available slot; the time domain resource occupied by the first signal depending on only the first SSB resource configuration amongst the plurality of SSB resource configurations comprises: the first available slot group depends on all SSB resources indicated by only the first SSB resource configuration amongst the plurality of SSB resource configurations; and the time domain resource occupied by the first signal depending on all SSB resources indicated by the plurality of SSB resource configurations comprises: the first available slot group depends on all SSB resources indicated by the plurality of SSB resource configurations.

7. The first node device according to any one of claims 1 to 6, wherein the first signaling is used for indicating a first symbol set, symbols occupied by the first signal comprise at least one symbol in the first symbol set that does not belong to a first invalid symbol group, and the first invalid symbol group comprises at least one invalid symbol; the time domain resource occupied by the first signal depending on only the first SSB resource configuration amongst the plurality of SSB resource configurations comprises: the first invalid symbol group depends on all SSB resources indicated by only the first SSB resource configuration amongst the plurality of SSB resource configurations; and the time domain resource occupied by the first signal depending on all SSB resources indicated by the plurality of SSB resource configurations comprises: the first invalid symbol group depends on all SSB resources indicated by the plurality of SSB resource configurations.

8. A second node device for wireless communication, comprising:

a second transmitter sending a plurality of SSB resource configurations, any SSB resource configuration amongst the plurality of SSB resource configurations being used for indicating at least one SSB resource, and the plurality of SSB resource configurations being all associated with a first cell; sending a first information block, the first information block being used for determining a first SSB resource configuration, and the first SSB resource configuration being one of the plurality of SSB resource configurations; and sending a first signaling on the first cell, the first signaling being used for scheduling a first signal; and a second receiver receiving the first signal on the first cell, wherein in response to receiving the first information block, a recipient of the first information block determines an SSB transmission according to only the first SSB resource configuration amongst the plurality of SSB resource configurations; and a time domain resource occupied by the first signal depends on only the first SSB resource configuration amongst the plurality of SSB resource configurations, or the time domain resource occupied by the first signal depends on all SSB resources indicated by the plurality of SSB resource configurations.

9. The second node device according to claim 8, comprising:
the second transmitter sending a second signaling, the second signaling being used for scheduling a second signal; abandoning receiving the second signal on a target time domain resource when a first condition is met; and receiving the second signal on the target time domain resource when the first condition is not met, wherein the time domain resource occupied by the first signal depends on only the first SSB resource configuration amongst the plurality of SSB resource configurations; the target time domain resource depends on one SSB resource configuration other than the first SSB resource configuration amongst the plurality of SSB resource configurations; and the first condition comprises: the target time domain resource overlaps with an SSB resource determined by the first SSB resource configuration in a time domain.

10. The second node device according to claim 9, wherein

the first condition further comprises that the second signaling is received no later than a first symbol, and the first symbol depends on a symbol occupied by the first information block; or the first condition further comprises that the target time domain resource is not earlier than a first symbol, and the first symbol depends on a symbol occupied by the first information block.

11. The second node device according to any one of claims 8 to 10, wherein
the plurality of SSB resource configurations being all associated with a first cell comprises: all SSB resources respectively indicated by the plurality of SSB resource configurations are all on the first cell.

**12.** The second node device according to any one of claims 8 to 11, wherein

the first cell is an SCell, and an SSB resource indicated by at least one SSB resource configuration amongst the plurality of SSB resource configurations is on a second cell; and the second cell is a PCell, or the second cell is one SCell other than the first cell; or
the first cell is an SCell, an SSB resource indicated by the first SSB resource configuration is on the first cell, and an SSB resource indicated by at least one SSB resource configuration amongst the plurality of SSB resource configurations is on a second cell; and the second cell is a PCell, or the second cell is one SCell other than the first cell.

**13.** The second node device according to any one of claims 8 to 12, wherein
the first signal is transmitted in a first available slot group, and the first available slot group comprises at least one available slot; the meaning of "a time domain resource occupied by the first signal depends on only the first SSB resource configuration amongst the plurality of SSB resource configurations" comprises: the first available slot group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first available slot group depends on all SSB resources indicated by the plurality of SSB resource configurations.

**14.** The second node device according to any one of claims 8 to 13, wherein
the first signaling is used for indicating a first symbol set, symbols occupied by the first signal comprise at least one symbol in the first symbol set that does not belong to a first invalid symbol group, and the first invalid symbol group comprises at least one invalid symbol; the time domain resource occupied by the first signal depending on only the first SSB resource configuration amongst the plurality of SSB resource configurations comprises: the first invalid symbol group depends on all SSB resources indicated by only the first SSB resource configuration amongst the plurality of SSB resource configurations; and the time domain resource occupied by the first signal depending on all SSB resources indicated by the plurality of SSB resource configurations comprises: the first invalid symbol group depends on all SSB resources indicated by the plurality of SSB resource configurations.

**15.** A method used in a first node device for wireless communication, comprising:

receiving a plurality of SSB resource configurations, any SSB resource configuration amongst the plurality of SSB resource configurations being used for indicating at least one SSB resource, and the plurality of SSB resource configurations being all associated with a first cell;
receiving a first information block, the first information block being used for determining a first SSB resource configuration, and the first SSB resource configuration being one of the plurality of SSB resource configurations;
in response to receiving the first information block, determining an SSB transmission according to only the first SSB resource configuration amongst the plurality of SSB resource configurations;
receiving a first signaling on the first cell, the first signaling being used for scheduling a first signal; and
sending the first signal on the first cell,
wherein a time domain resource occupied by the first signal depends on only the first SSB resource configuration amongst the plurality of SSB resource configurations, or the time domain resource occupied by the first signal depends on all SSB resources indicated by the plurality of SSB resource configurations.

**16.** The method used in a first node device according to claim 15, comprising:

receiving a second signaling, the second signaling being used for scheduling a second signal;
abandoning sending the second signal on a target time domain resource when a first condition is met; and sending the second signal on the target time domain resource when the first condition is not met,
wherein the time domain resource occupied by the first signal depends on only the first SSB resource configuration amongst the plurality of SSB resource configurations; the target time domain resource depends on one SSB resource configuration other than the first SSB resource configuration amongst the plurality of SSB resource configurations; and the first condition comprises: the target time domain resource overlaps with an SSB resource determined by the first SSB resource configuration in a time domain.

**17.** The method used in a first node device according to claim 16, wherein

the first condition further comprises that the second signaling is received no later than a first symbol; and the first symbol depends on a symbol occupied by the first information block; or the first condition further comprises that the target time domain resource is not earlier than a first symbol; and the first symbol depends on a symbol occupied by the first information block.

18. The method used in a first node device according to any one of claims 15 to 17, wherein
the plurality of SSB resource configurations being all associated with a first cell comprises: all SSB resources respectively indicated by the plurality of SSB resource configurations are all on the first cell.

19. The method used in a first node device according to any one of claims 15 to 18, wherein

the first cell is an SCell, and an SSB resource indicated by at least one SSB resource configuration amongst the plurality of SSB resource configurations is on a second cell; and the second cell is a PCell, or the second cell is one SCell other than the first cell; or
the first cell is an SCell, an SSB resource indicated by the first SSB resource configuration is on the first cell, and an SSB resource indicated by at least one SSB resource configuration amongst the plurality of SSB resource configurations is on a second cell; and the second cell is a PCell, or the second cell is one SCell other than the first cell.

20. The method used in a first node device according to any one of claims 15 to 19, wherein
the first signal is transmitted in a first available slot group, and the first available slot group comprises at least one available slot; the time domain resource occupied by the first signal depending on only the first SSB resource configuration amongst the plurality of SSB resource configurations comprises: the first available slot group depends on all SSB resources indicated by only the first SSB resource configuration amongst the plurality of SSB resource configurations; and the time domain resource occupied by the first signal depending on all SSB resources indicated by the plurality of SSB resource configurations comprises: the first available slot group depends on all SSB resources indicated by the plurality of SSB resource configurations.

21. The method used in a first node device according to any one of claims 15 to 20, wherein
the first signaling is used for indicating a first symbol set, symbols occupied by the first signal comprise at least one symbol in the first symbol set that does not belong to a first invalid symbol group, and the first invalid symbol group comprises at least one invalid symbol; the time domain resource occupied by the first signal depending on only the first SSB resource configuration amongst the plurality of SSB resource configurations comprises: the first invalid symbol group depends on all SSB resources indicated by only the first SSB resource configuration amongst the plurality of SSB resource configurations; and the time domain resource occupied by the first signal depending on all SSB resources indicated by the plurality of SSB resource configurations comprises: the first invalid symbol group depends on all SSB resources indicated by the plurality of SSB resource configurations.

22. A method used in a second node device for wireless communication, comprising:

sending a plurality of SSB resource configurations, any SSB resource configuration amongst the plurality of SSB resource configurations being used for indicating at least one SSB resource, and the plurality of SSB resource configurations being all associated with a first cell;
sending a first information block, the first information block being used for determining a first SSB resource configuration, and the first SSB resource configuration being one of the plurality of SSB resource configurations;
sending a first signaling on the first cell, the first signaling being used for scheduling a first signal; and
receiving the first signal on the first cell,
wherein in response to receiving the first information block, a recipient of the first information block determines an SSB transmission according to only the first SSB resource configuration amongst the plurality of SSB resource configurations; and a time domain resource occupied by the first signal depends on only the first SSB resource configuration amongst the plurality of SSB resource configurations, or the time domain resource occupied by the first signal depends on all SSB resources indicated by the plurality of SSB resource configurations.

23. The method used in a second node device according to claim 22, comprising:

sending a second signaling, the second signaling being used for scheduling a second signal;
abandoning receiving the second signal on a target time domain resource when a first condition is met; and receiving the second signal on the target time domain resource when the first condition is not met,
wherein the time domain resource occupied by the first signal depends on only the first SSB resource configuration amongst the plurality of SSB resource configurations; the target time domain resource depends on one SSB resource configuration other than the first SSB resource configuration amongst the plurality of SSB resource configurations; and the first condition comprises: the target time domain resource overlaps with an SSB resource determined by the first SSB resource configuration in a time domain.

24. The method used in a second node device according to claim 23, wherein

the first condition further comprises that the second signaling is received no later than a first symbol; and the first symbol depends on a symbol occupied by the first information block; or the first condition further comprises that the target time domain resource is not earlier than a first symbol; and the first symbol depends on a symbol occupied by the first information block.

25. The method used in a second node device according to any one of claims 22 to 24, wherein the plurality of SSB resource configurations being all associated with a first cell comprises: all SSB resources respectively indicated by the plurality of SSB resource configurations are all on the first cell.

26. The method used in a second node device according to any one of claims 22 to 25, wherein

the first cell is an SCell, and an SSB resource indicated by at least one SSB resource configuration amongst the plurality of SSB resource configurations is on a second cell; and the second cell is a PCell, or the second cell is one SCell other than the first cell; or the first cell is an SCell, an SSB resource indicated by the first SSB resource configuration is on the first cell, and an SSB resource indicated by at least one SSB resource configuration amongst the plurality of SSB resource configurations is on a second cell; and the second cell is a PCell, or the second cell is one SCell other than the first cell.

27. The method used in a second node device according to any one of claims 22 to 26, wherein the first signal is transmitted in a first available slot group, and the first available slot group comprises at least one available slot; the meaning of "a time domain resource occupied by the first signal depends on only the first SSB resource configuration amongst the plurality of SSB resource configurations" comprises: the first available slot group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first available slot group depends on all SSB resources indicated by the plurality of SSB resource configurations.

28. The method used in a second node device according to any one of claims 22 to 27, wherein the first signaling is used for indicating a first symbol set, symbols occupied by the first signal comprise at least one symbol in the first symbol set that does not belong to a first invalid symbol group, and the first invalid symbol group comprises at least one invalid symbol; the meaning of "a time domain resource occupied by the first signal depends on only the first SSB resource configuration amongst the plurality of SSB resource configurations" comprises: the first invalid symbol group depends on all SSB resources indicated by only the first SSB resource configuration amongst the plurality of SSB resource configurations; and the meaning of "a time domain resource occupied by the first signal depends on all SSB resources indicated by the plurality of SSB resource configurations" comprises: the first invalid symbol group depends on all SSB resources indicated by the plurality of SSB resource configurations.

100

First node

Receive a plurality of SSB resource configurations — 101

Receive a first information block — 102

Receive a first signaling — 103

Send a first signal — 104

FIG. 1

FIG. 2

FIG. 3

FIG. 4

N02. Second node                                              U01. First node

| S21. Send a plurality of SSB resource configurations |

———————— A plurality of SSB resource configurations ————————→

| S11. Receive a plurality of SSB resource configurations |

| S22. Send a first information block |

———————————— First information block ————————————→

| S12. Receive the first information block |

- - - - - - - - - - - - - - - - - - - - - - - - - - - - - - - - - - - -   F51. Optional

| S23. Send a second signaling |

———————————————— Second signaling ————————————————→

| S13. Receive the second signaling |

- - - - - - - - - - - - - - - - - - - - - - - - - - - - - - - - - - - -   F52. Optional

| S14. Send a second signal |

←———————————————— Second signal ————————————————

| S24. Receive the second signal |

| S25. Send a first signaling |

———————————————— First signaling ————————————————→

| S15. Receive the first signaling |

| S16. Send a first signal |

←———————————————— First signal ————————————————

| S26. Receive the first signal |

( End )                                                          ( End )

FIG. 5

First condition —— When met ——→ Abandon sending the second signal on a target time domain resource

First condition —— When not met ——→ Send the second signal in a target time domain resource

FIG. 6

First condition —— Further comprises ——→ The second signaling is received no later than a first symbol

FIG. 7A

First condition —— Further comprises ——→ The target time domain resource is not earlier than a first symbol

FIG. 7B

A plurality of SSB resource configurations —— Are all associated with ——→ A first cell

FIG. 8

An SSB resource indicated by at least one SSB resource configuration amongst the plurality of SSB resource configurations —— Is on ——→ A second cell

FIG. 9

An SSB resource indicated by a first SSB resource configuration —— Is on ——→ A first cell

An SSB resource indicated by at least one SSB resource configuration amongst the plurality of SSB resource configurations —— Is on ——→ A second cell

FIG. 10

The meaning of "a time domain resource occupied by the first signal depends on only the first SSB resource configuration amongst the plurality of SSB resource configurations"

Comprises →

The first available slot group depends on all SSB resources indicated by only the first SSB resource configuration amongst the plurality of SSB resource configurations

The meaning of "the time domain resource occupied by the first signal depends on all SSB resources indicated by the plurality of SSB resource configurations"

Comprises →

The first available slot group depends on all SSB resources indicated by the plurality of SSB resource configurations

The first signal is transmitted in a first available slot group

FIG. 11

The meaning of "a time domain resource occupied by the first signal depends on only the first SSB resource configuration amongst the plurality of SSB resource configurations"

Comprises →

The first invalid symbol group depends on all SSB resources indicated by only the first SSB resource configuration amongst the plurality of SSB resource configurations

The meaning of "the time domain resource occupied by the first signal depends on all SSB resources indicated by the plurality of SSB resource configurations"

Comprises →

The first invalid symbol group depends on all SSB resources indicated by the plurality of SSB resource configurations

Symbols occupied by the first signal comprise at least one symbol in the first symbol set that does not belong to a first invalid symbol group

FIG. 12

FIG. 13

FIG. 14

## INTERNATIONAL SEARCH REPORT

| International application No. |
|---|
| **PCT/CN2024/079772** |

**A.    CLASSIFICATION OF SUBJECT MATTER**

H04W72/0446(2023.01)i

According to International Patent Classification (IPC) or to both national classification and IPC

**B.    FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT: CNABS; CNKI; VEN; WOTXT; USTXT; EPTXT: 同步信号块, 配置, 索引, 小区, SSB, synchronization signal, allocate, index, cell

**C.    DOCUMENTS CONSIDERED TO BE RELEVANT**

| Category* | Citation of document, with indication, where appropriate, of the relevant passages | Relevant to claim No. |
|---|---|---|
| X | CN 115715014 A (SHANGHAI LANGBO COMMUNICATION TECHNOLOGY CO., LTD.) 24 February 2023 (2023-02-24) claims 1-10, and description, paragraphs [0086]-[0171] and [0247]-[0316] | 1-28 |
| X | CN 113541898 A (SHANGHAI LANGBO COMMUNICATION TECHNOLOGY CO., LTD.) 22 October 2021 (2021-10-22) see claims 1-10, description, paragraphs [0077]-[0196] and [0242]-[0277], and figure 5 | 1-28 |
| A | CN 115347923 A (SHANGHAI LANGBO COMMUNICATION TECHNOLOGY CO., LTD.) 15 November 2022 (2022-11-15) entire document | 1-28 |
| A | US 2019159213 A1 (TELEFONAKTIEBOLAGET LM ERICSSON (PUBL)) 23 May 2019 (2019-05-23) entire document | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 May 2024** | **15 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| | International application No. |
|---|---|
| | **PCT/CN2024/079772** |

| Patent document cited in search report | | | Publication date (day/month/year) | Patent family member(s) | | | Publication date (day/month/year) |
|---|---|---|---|---|---|---|---|
| CN | 115715014 | A | 24 February 2023 | WO | 2023020317 | A1 | 23 February 2023 |
| CN | 113541898 | A | 22 October 2021 | WO | 2021180059 | A1 | 16 September 2021 |
| CN | 115347923 | A | 15 November 2022 | WO | 2022073492 | A1 | 14 April 2022 |
| US | 2019159213 | A1 | 23 May 2019 | EP | 3691170 | A1 | 05 August 2020 |
| | | | | EP | 3691170 | B1 | 18 August 2021 |
| | | | | CA | 3186287 | A1 | 23 May 2019 |
| | | | | ES | 2899706 | T3 | 14 March 2022 |
| | | | | KR | 20200066710 | A | 10 June 2020 |
| | | | | KR | 102397166 | B1 | 13 May 2022 |
| | | | | PL | 3691170 | T3 | 10 January 2022 |
| | | | | BR | 112020009840 | A2 | 15 September 2020 |
| | | | | BR | 112020009840 | B1 | 29 June 2021 |
| | | | | US | 2020245338 | A1 | 30 July 2020 |
| | | | | US | 10939450 | B2 | 02 March 2021 |
| | | | | DK | 3556042 | T3 | 27 April 2020 |
| | | | | EP | 4184845 | A1 | 24 May 2023 |
| | | | | PT | 3556042 | T | 24 April 2020 |
| | | | | US | 2021153206 | A1 | 20 May 2021 |
| | | | | US | 11096180 | B2 | 17 August 2021 |
| | | | | US | 2023362967 | A1 | 09 November 2023 |
| | | | | EP | 3556042 | A1 | 23 October 2019 |
| | | | | EP | 3556042 | B1 | 04 March 2020 |
| | | | | ES | 2788059 | T3 | 20 October 2020 |
| | | | | ES | 2788059 | T8 | 04 April 2022 |
| | | | | CA | 3082466 | A1 | 23 May 2019 |
| | | | | CA | 3082466 | C | 21 March 2023 |
| | | | | PT | 3691170 | T | 02 September 2021 |
| | | | | MX | 2020004976 | A | 24 August 2020 |
| | | | | US | 10645701 | B2 | 05 May 2020 |
| | | | | SG | 11202003528 | UA | 28 May 2020 |
| | | | | JP | 2021503734 | A | 12 February 2021 |
| | | | | JP | 7046174 | B2 | 01 April 2022 |
| | | | | ES | 2935526 | T3 | 07 March 2023 |
| | | | | WO | 2019098931 | A1 | 23 May 2019 |
| | | | | DK | 3691170 | T3 | 25 October 2021 |
| | | | | US | 2021377955 | A1 | 02 December 2021 |
| | | | | US | 11659577 | B2 | 23 May 2023 |
| | | | | RU | 2744014 | C1 | 02 March 2021 |
| | | | | EP | 3930248 | A1 | 29 December 2021 |
| | | | | EP | 3930248 | B1 | 26 October 2022 |

Form PCT/ISA/210 (patent family annex) (July 2022)